# EUROPEAN PATENT APPLICATION

(11) **EP 4 759 111 A1**
(43) Date of publication of application: **17.06.2026**
(21) Application number: 25216172.4
(22) Date of filing: 17.11.2025
(51) Int. Cl.: A01C 7/06, A01C 23/00

(54) **AGRICULTURAL SYSTEM AND COMPUTER IMPLEMENTED METHOD OF OPERATING SUCH**

(30) Priority: 16.12.2024 US 202418982744
(71) Applicant: Deere & Company, Moline, IL 61265 (US)
(72) Inventor: GOLDBERG, BENJAMIN I, 68163 Mannheim (DE); MARX, SAMUEL E., 68163 Mannheim (DE)
(74) Representative: Reichert, Christian

(57) **Abstract**

An agricultural system is disclosed. The agricultural system, comprising: an application machine (100) having a plurality of row units (106), each row unit (106) having an applicator (209); a first flow meter (320) mounted to the application machine (100) and configured to detect an amount of material applied from a first applicator (209) on the application machine (100) and generate a first flow meter signal (352) indicative of the detected amount of the material; a first pressure sensor (306) mounted to the application machine (100) and configured to detect a pressure in a second applicator (209) on the application machine (100) and generate a first pressure sensor signal (350) indicative of the detected pressure; an application state detection system (321) configured to identify an applicator state for the second applicator (209) based on the first flow meter signal (352) and the first pressure sensor signal (350); and a control signal generator (328) configured to generate a control signal (364) based on the applicator state for the second applicator (209). Furthermore, a computer implemented method of operating such agricultural system is disclosed.

## Description

### FIELD OF THE DESCRIPTION

The present description relates to agricultural machines. More specifically, the present description relates to detecting flow errors during application of material to a field, using an agricultural machine.

### BACKGROUND

There is a wide variety of different types of agricultural machines that apply material to an agricultural field. Some such agricultural machines include sprayers, tillage machines with side dressing bars, air seeders, and planters that have row units, among others.

As one example, a row unit is often mounted to a planter with a plurality of other row units. The planter is often towed by a tractor or moved over soil by another propulsion vehicle where seed is planted in the soil, using the row units. The row units on the planter follow the ground profile by using a combination of a down force assembly that imparts a down force to the row unit to push disk openers into the ground and gauge wheels to set depth of penetration of the disk openers. Row units can also be used to apply material to the field (e.g., fertilizer to the soil, to a seed, etc.) over which the row units are traveling. In some scenarios, each row unit has a valve that is coupled between a source of material to be applied, and an application assembly. As the valve is actuated, the material passes through the valve, from the source to the application assembly, and is applied to the field.

The discussion above is merely provided for general background information and is not intended to be used as an aid in determining the scope of the claimed subject matter.

### SUMMARY

An agricultural machine includes a plurality of applicators. At least one of the applicators includes a corresponding flow meter that measures a quantity of material applied and generates a flowmeter signal indicative of the measured quantity. At least one other applicator has a corresponding sensor that senses a characteristic during application of the material. An applicator state is detected for the at least one other applicator based upon the characteristic corresponding to the applicator and the flowmeter signal corresponding to the at least one applicator. A control signal is generated based on the detected state of the at least one other applicator.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

FIG. 1 is a top view of an agricultural architecture with one example of a planting machine, shown in a partial pictorial and partial schematic form.
FIG. 2 shows a block diagram of one example of a portion of an agricultural system.
FIG. 3 shows a block diagram of one example of a portion of an agricultural system.
FIG. 4 shows a block diagram of one example of a portion of an agricultural system.
FIG. 5 is a side view showing one example of a row unit of the planting machine illustrated in FIG. 1.
FIG. 6 is a side view showing another example of a row unit of the planting machine illustrated in FIG. 1.
FIG. 7 is a side view showing another example of a row unit of the planting machine illustrated in FIG. 1.
FIG. 8 is a view of an application unit.
FIG. 9 is an enlarged view of a portion of a row unit of the planting machine illustrated in FIG. 6.
FIG. 10 is an enlarged view of one example of an applicator.
FIGS. 11A and 11B (collectively referred to herein as FIG. 11) show a block diagram showing one example of an agricultural system with a material application control system.
FIGS. 12A and 12B (collectively referred to herein as FIG. 12) show a flow diagram illustrating one example of the operation of the material application control system shown in FIG. 11.
FIG. 13 shows one example of the architecture illustrated in FIG. 1, deployed in a remote server environment.
FIGS. 14, 15, and 16 show examples of mobile devices that can be used as operator interface mechanisms in the architectures shown in the previous Figures.
FIG. 17 is a block diagram showing one example of a computing environment that can be used in the architectures shown in the previous Figures.

### DETAILED DESCRIPTION

For the purposes of promoting an understanding of the principles of the present disclosure, reference will now be made to the examples illustrated in the drawings, and specific language will be used to describe the same. It will nevertheless be understood that no limitation of the scope of the disclosure is intended. Any alterations and further modifications to the described devices, systems, methods, and any further application of the principles of the present disclosure are fully contemplated as would normally occur to one skilled in the art to which the disclosure relates. In particular, it is fully contemplated that the features, components, and/or steps described with respect to one example may be combined with the features, components, and/or steps described with respect to other examples of the present disclosure.

As discussed above, many current systems apply material to a field. Some systems that apply material to a field include a set of actuators that actuate a set of valves or nozzles. The material to be applied to the field (which may be liquid) is pumped from a tank to the valves or nozzles through supply lines. A control system controls the actuators to actuate the valves or nozzles (to open and/or close the valves or nozzles) to allow the material under pressure to flow through the valves or nozzles, out of a spray tip or exit orifice, onto the field. Some spray tips are configured to provide a desired spray pattern, while others are fixed orifices or open tubing or outlets from a tube.

The environments in which systems apply material to a field are often dusty so that the applicators encounter dust, dirt, and other debris. It is not uncommon for moisture to accumulate on the nozzle or spray tip of an applicator and thus gather dust or other debris causing a partial or full blockage of the spray tip. Similarly, the spray tip on the applicators may be knocked off or may fall off of the applicator. Thus, instead of generating a desired spray pattern, the flow of material through the applicator is unrestricted.

In an attempt to detect the state of the applicator (such as whether the applicator is unblocked, fully blocked, partially blocked, or unrestricted), a pressure sensor may be deployed on the downstream side of the valve to detect fluid pressure downstream of the valve in the applicator. However, the signal generated by the pressure sensor may be prone to excessive noise, in some conditions, thus making it difficult to identify the state of the applicator. Other systems may use a flow meter that measures a quantity of material that flows through each valve. The output of the flow meter can then be used to identify the state of the corresponding applicator. However, machines that are used to apply material to a field may have numerous applicators. For instance, such a machine may have numerous row units and there may be multiple valves or applicators on each row unit, thus making the use of a flow meter on every applicator inefficient.

The present description thus proceeds with respect to a system in which an application machine has a plurality of different applicators. At least one of the applicators has a flow meter configured to measure the amount of material applied by the applicator and generate a flow meter signal indicative of that measured amount. At least the remaining applicators have a pressure sensor disposed relative to the valve in the applicator to generate a material pressure signal. Features can be extracted from the signals and the signal values and features can be processed by an applicator state detection system. The applicator state detection system generates an output indicative of the state of each applicator, such as whether there is a partial blockage, a full blockage, no blockage, or an unrestricted flow (meaning that the spray tip may be damaged or missing), as well as a relative flow rate compared to the flow rate in other applicators. A control signal can be generated based upon the applicator state. The control signal can notify the operator of the state of the applicator, control the applicator itself, control a central flow system, or control other items.

Also, in one example, there are multiple different flowmeters deployed on an application machine. The applicators can be grouped into different groups and a flow meter can be deployed on each group. For instance, there may be multiple applicators on a row unit and there may be one flow meter deployed on each row unit. Similarly, the row units may be grouped into sections or banks and there may be a flow meter deployed on each section or bank of row units. Further, there may be only a single flow meter deployed on an entire application machine. That single flow meter may be centrally located on the application machine and measure the amount of material applied through a centrally located applicator, or the flow meter may be deployed at another position to measure the amount of material applied through another applicator. In all of these scenarios, the flow meter can be used in conjunction with the sensor signals generated by pressure sensors deployed on the other applicators to identify a state corresponding to each applicator or corresponding to different sets of applicators.

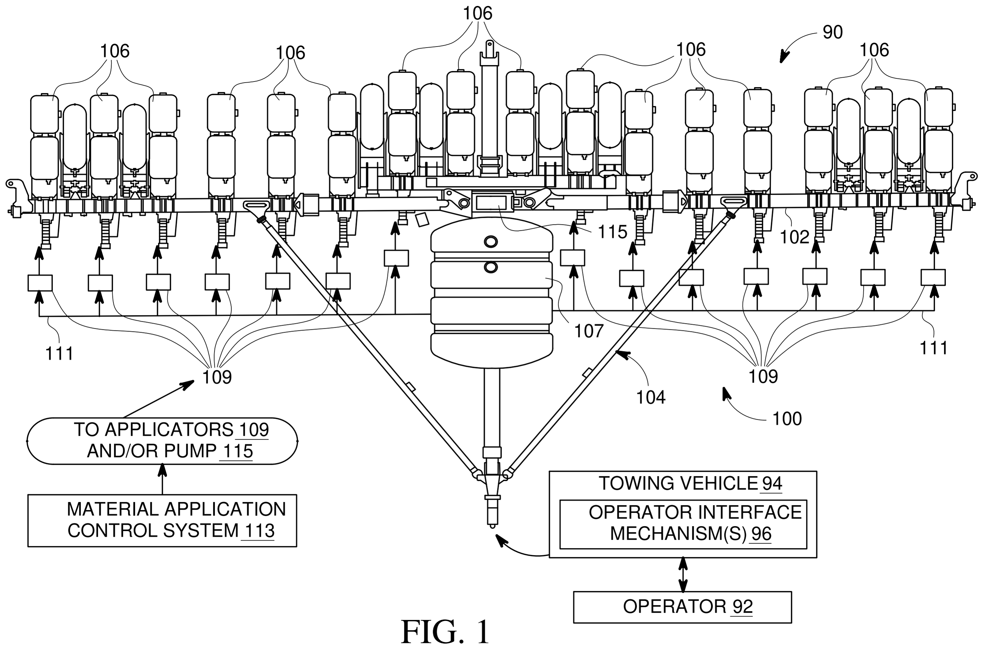

FIG. 1 is a partial pictorial, partial schematic top view of one example of an agricultural system or architecture 90 that includes agricultural planting machine 100, towing vehicle 94, that is operated by operator 92, and material application control system 113, which can be deployed on one or more individual parts of machine 100, centrally located on machine 100, remotely located, distributed, or located on towing vehicle 94. Operator 92 (which can be a manual operator, an automated operator, or a semi-automated operator) can illustratively interact with operator interface mechanisms 96 to manipulate and control vehicle 94, system 113, and some or all portions of machine 100.

In the example shown in FIG. 1 machine 100 is a row crop planting machine that illustratively includes a toolbar 102 that is part of a frame 104. FIG. 1 also shows that a plurality of planting row units 106 are mounted to the toolbar 102. Machine 100 can be towed behind towing vehicle 94, such as a tractor. FIG. 1 shows that material can be stored in a tank 107 (or material(s) can be stored in a plurality of tanks) and pumped through one or more supply lines 111 so the material can be dispensed or applied in or near the rows being planted. In one example, a set of applicators 109 is provided to perform the application operation. For instance, applicators 109 can include individual pumps that service individual row units 106 and that pump material from tank(s) 107 through supply line(s) 111 so the material(s) can be dispensed on the field. In such an example, material application control system 113 controls the pumps 109. Also, applicators 109 can include actuators that actuate valves or nozzles. One or more pumps 115 pump the material from tank(s) 107 to the valves or nozzles through supply line(s) 111. In such an example, material application control system 113 controls the actuators by generating actuator control signals to apply material according to a desired pattern, e.g., to apply a continuous strip of material, to apply material in an overlapping pattern, to apply material in a spaced pattern (e.g. on a per-seed basis), or in other ways.

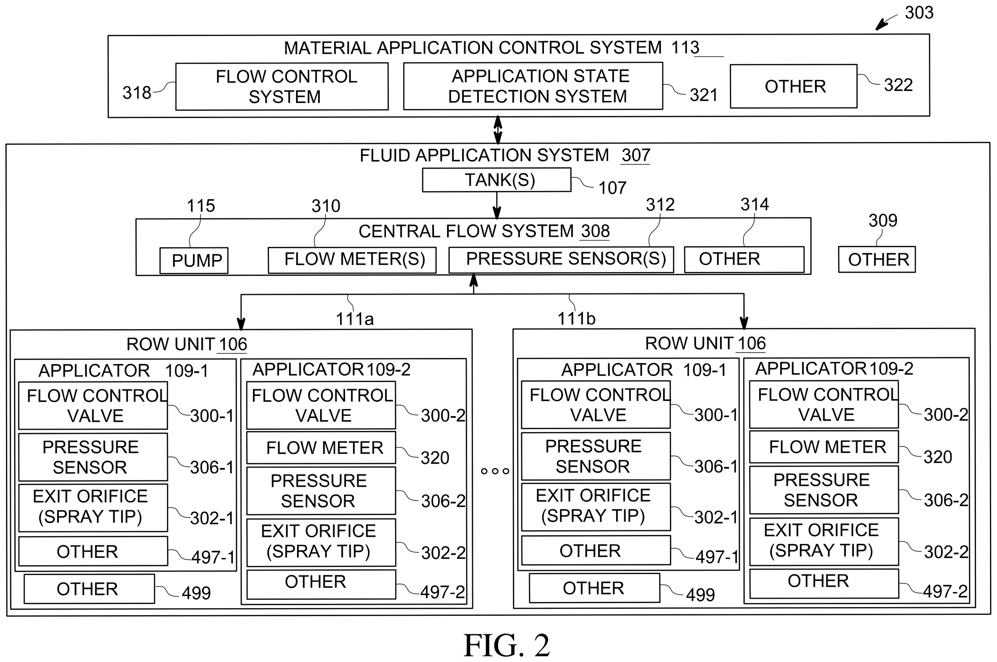

Material application control system 113 also receives sensor signals and other information and identifies problems with applicators 109, such as whether the applicators 109 are blocked, partially blocked, or unrestricted. Identifying such problems is described in greater detail elsewhere herein. FIG. 2 is a block diagram showing one example of a portion of an agricultural system or agricultural architecture. In the example shown in FIG. 2, an agricultural system or architecture 303 for a fluid application system 307 on machine 100 is illustrated in which each row unit 106 has a plurality of applicators. The applicators on each row unit 106 are numbered 109-1 to 109-2. However, it will be appreciated that there may be any number of applicators on each row unit 106. In the example shown in FIG. 2, a single tank 107 holds material that is sent to the set of applicators 109-1 to 109-2 on each row unit 106 by a central flow system 308 which includes one or more pumps 115, flow meter 310, pressure sensor 312, and other items 314. Fluid is pumped by one or more pumps 115 through a plurality of different supply lines (labeled 111A-111B in FIG. 2) to a plurality of different applicators 109-1, 109-2 on each row unit 106. Each applicator 109-1, 109-2 can have a flow control valve (300-1, 300-2) that is controlled by an actuator. Each applicator 109-1, 109-2 can also have an exit orifice defined by a spray tip 302-1, 302-2, which may be an opening in the end of a tube, a spray tip that provides a desired spray pattern, or another spray tip. The valves 300-1, 300-2 are opened to allow liquid under pressure to flow out through spray tip 302-1, 302-2. A valve output pressure sensor 306-1, 306-2 is deployed to sense fluid pressure downstream of valve 300-1, 300-2, but upstream of spray tip 302-1, 302-2. Pressure sensors 306-1 through 306-2 could also deployed at other locations on the applicators 109-1 and 109-2. Also, in the example shown in FIG. 2, one applicator 109-2 on each row unit 106 has a flow meter 320. Flow meter 320 is configured to measure the amount of material flowing out of applicator 109-2 onto the field by measuring linear, non-linear, mass, or volumetric flow rates, or in another way. Flow meters 320 can be ultrasonic flow meters, mass flow meters, or any of a variety of other flow sensors. Applicators 109-1 and 109-2 can include other items 497-1 and 497-2. Row units 106 can include other items 499. Fluid application system 307 can include other items 309 as well.

In operation, the pressure generated in lines 111A, 111B by pump(s) 115 can be sensed by pressure sensor 312. The flow of material generated by pump 115 can be sensed by flow meter 310 (which can be similar to, or different from, flow meter 320). Pressure sensors 306-1, 306-2, and 312 can be pressure sensors or pressure transducers. Pressure sensors 306-1, 306-2, and 312 can be diaphragm sensors, manometer sensors, Bourdon tube sensors, piezoelectric sensors, strain gauge sensors, or other sensors.

FIG. 2 also shows that material application control system 113 can include flow control system 318, application detection and control system 321, and other items 322. Flow control system 318 can generate control signals which are provided to control the different applicators 109 on the different row units 106. Therefore, material application control system 113 can generate different control signals to independently control the individual applicators 109-1 and 109-2 independently of one another on each of the row units 106 so that the material from tank 107 can be applied according to a first application pattern (e.g., continuously in a furrow) using applicator 109-1 and according to a second application pattern (e.g., intermittently based upon seed position in the furrow) using applicator 109-2, or the applicators can both apply material according to the same pattern..

Also, in one example, application detection and control system 321 receives sensor signals from sensors 310, 312, 306-1, 306-2, and 320 as well as other information (such as a target application rate, characteristics of the spray tips 302-1, 302-2, and/or other information), and provides that information to an applicator state detection system (described in greater detail elsewhere herein) that generates an output corresponding to each applicator 109-1, 109-2 indicative of the state of that applicator, such as whether the applicator is unblocked, partially blocked, fully blocked, unrestricted, etc. In addition, application state detection system 321 can estimate or identify the relative flow through each applicator 109-1, 109-2, and other items, and provide an output to generate a control signal based upon the state of the applicator, the relative flow through the applicator, etc.

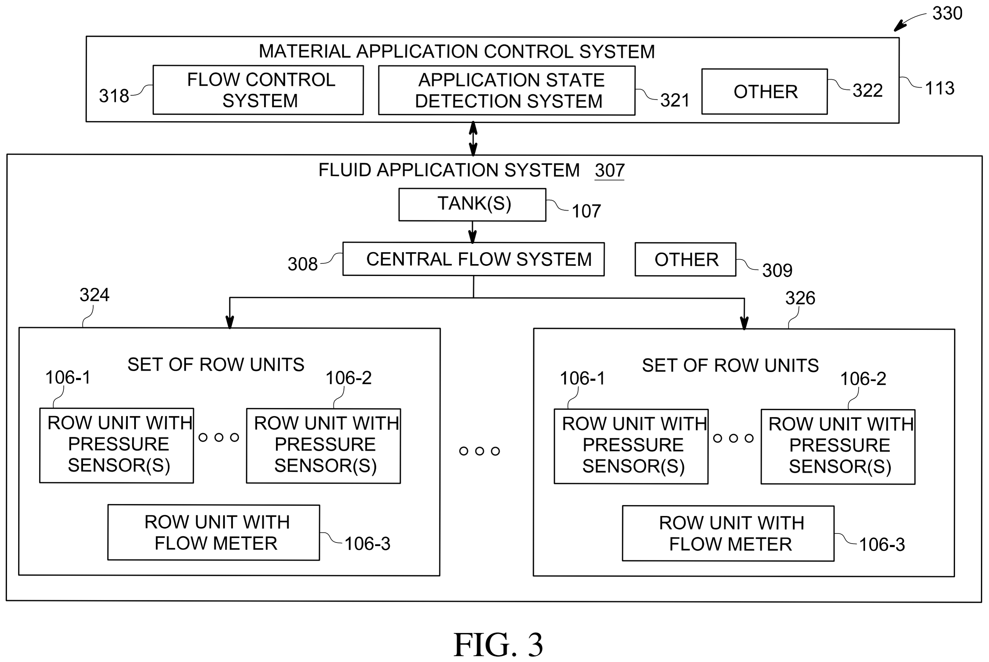

FIG. 3 shows an example that is similar to FIG. 2, and similar items are similarly numbered. However, FIG. 3 shows an architecture 330 in which the row units 106 are grouped into different sets of row units 324-326. One set of row units 324 has a plurality of row units 106-1 through 106-2, each with a pressure sensor 306-1 and 306-2. The set of row units 324 also includes a row unit 106-3 which is equipped with a flow meter 320. Similarly, the set of row units 326 has a plurality of row units 106-1 through 106-2, each with a pressure sensor 306-1 and 306-2. The set of row units 326 also includes a row unit 106-3 that is configured with a flow meter 320. Thus, in the architecture shown in FIG. 3, there is one flow meter 320 for each set of a plurality of different row units 324 and 326.

In operation, the sensor signals from the pressure sensors 306-1 and 306-2 on row units 106-1 and 106-2 is fed back to application state detection system 321, along with the signal generated from the flow meter 320 on row unit 106-3. Based upon the pressure sensor signals and the flowmeter signals, application state detection system 321 detects whether each of the applicators 109 on each of the row units 106 is blocked, partially blocked, unrestricted, or has a different state. Similarly, the signals from the pressure sensors 306-1 through 306-2 on row units 106-1 to 106-2 are fed back to application state detection system 321, along with the signal generated by the flowmeter 320 on row unit 106-3. Based upon those signals, application state detection system 321 generates an output indicative of the state of each applicator 109 on each of the row units 106 in the set of row units 326.

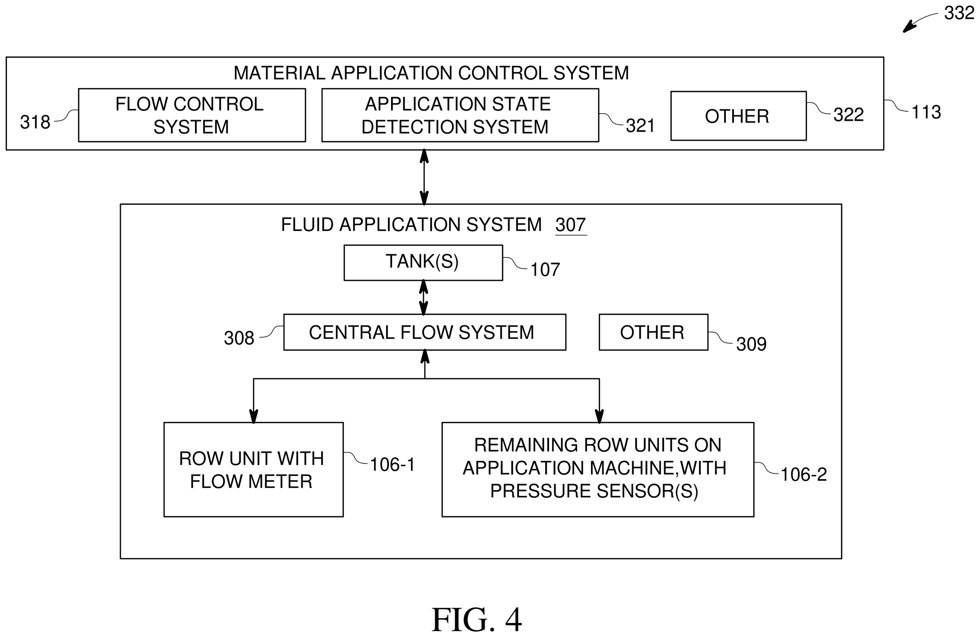

FIG. 4 shows an architecture 332, which is similar to architecture 330 shown in FIG. 3, and similar items are similarly numbered. However, in architecture 332, there is only a single row unit 106-1 with a flow meter 320 on a single applicator 109. The remaining applicators 109 on row unit 106-1 and the remaining row units 106-2 to 106-n on the application machine 100 are configured with pressure sensors 306.

In operation, the signal from the flowmeter 320 on row unit 106-1 is transmitted back to application state detection system 321, along with the sensor signals from the pressure sensors on other applicators 109 on row unit 106-1, as well as the pressure sensor signals from the pressure sensors on row units 106-2 to 106-n. Based upon the signals from the pressure sensors and from the flowmeter, application state detection system 321 generates an output indicative of the application state of each applicator 109 on the various row units 106-1 through 106-n.

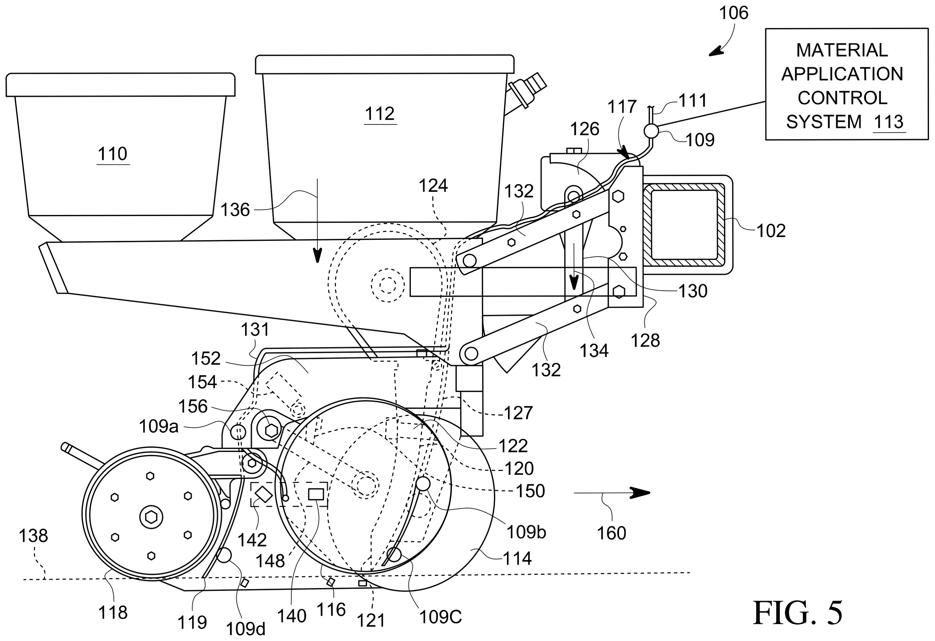

Some examples of the functionality on row units 106 will now be described with respect to FIGS. 5-8. FIG. 5 is a side view of one example of a row unit 106, with applicator 109 and system 113 shown as well. One more detailed example of applicator 109 is described elsewhere herein. FIG. 5 shows that one or more applicators 109 can be in at least six possible locations labeled as 109, 109A, 109B, 109C, 109D, and 109E. It will be appreciated that row unit 106 may illustratively have a plurality of independently controllable applicators 109 (such as applicators 109-1 to 109-2 shown elsewhere herein) that can be each located at one or more of the different locations indicated by numbers 109-109E or at other locations on row unit 106. Row unit 106 illustratively includes a chemical tank 110 and a seed storage tank 112. Row unit 106 also illustratively includes one or more disc openers 114, a set of gauge wheels 116, and a set of closing wheels 118. Seeds from tank 112 are fed into a seed meter 124, e.g., by gravity or from a centralized commodity distribution system (e.g., providing pneumatic commodity distribution to each row unit). The seed meter 124 controls the rate at which seeds are dropped into a seed tube 120 or other seed delivery system, such as a brush belt or flighted belt, from seed storage tank 112. The seeds can be sensed by a seed sensor 122.

In the example shown in FIG. 5, liquid material is passed, e.g., pumped or otherwise forced, through one or more supply lines 111 to an inlet end of each applicator 109. Each applicator 109 is controlled by control system 113 to allow the liquid to pass from the inlet end of applicator 109 to an outlet end. Material application control system 113 senses the ground speed of row unit 106 (e.g., by sensing the ground speed of towing vehicle 94 or in another way) and varies the control signal controlling applicator 109 based on the ground speed to maintain a desired application pattern. One example of the application of material through an applicator 109 will be discussed but it will be appreciated that the row unit 106 may have a plurality of independently controllable applicators 109 so one or more materials can be applied at different rates or according to different application patterns (e.g., continuously, overlapping, intermittently, etc.). By mentioning that the different applicators are actuated to apply material according to a different application pattern it is meant, for example, that one applicator is controlled to apply material at a different rate than another applicator, or that one applicator applies material according to one spatial pattern (such as continuously, or overlapping) that is different from a spatial pattern with which another applicator applies material (such as intermittently).

As liquid passes through each applicator 109, the liquid travels through an application assembly 117 from a proximal end (which is attached to an outlet end of each applicator 109) to a distal tip (or application tip) 119 (which may form the exit orifice 302 in previous FIGs.), where the liquid is discharged into a trench, or proximate a trench or furrow 162, opened by disc opener 114. The distal tip 119, in one example, can comprise exit orifice (or spray tip) 302 shown in FIGs. 2-4.

Some parts of row unit 106 will now be discussed in more detail. First, it will be noted that there are different types of seed meters 124, and the one that is shown is shown for the sake of example only. However, in one example, each row unit 106 need not have its own seed meter. Instead, metering or other singulation or seed dividing techniques can be performed at a central location, for groups of row units 106. The metering systems can include finger pick-up discs and/or vacuum meters (e.g., having rotatable discs, rotatable concave or bowl-shaped devices), among others. The seed delivery system can be a gravity drop system (such as seed tube 120 shown in FIG. 5 in which seeds are dropped through the seed tube 120 and fall (via gravitational force) through the seed tube and out the outlet end 121 into the seed trench 162. Other types of seed delivery systems may be or may include assistive systems, in that they do not simply rely on gravity to move the seed from the metering system into the ground. Instead, such assistive systems actively assist the seeds in moving from the meter to a lower opening, where the seeds exit or are deposited into the ground or trench. The assistive systems can be systems that physically capture the seed and move the seed from the meter to the outlet end of the seed delivery system or they can be pneumatic systems that pump air through the seed tube to assist movement of the seed. The air velocity can be controlled to control the speed at which the seed moves through the delivery system.

A downforce actuator 126 is mounted on a coupling assembly 128 that couples row unit 106 to toolbar 102. Down force actuator 126 can be a hydraulic actuator, a pneumatic actuator, a spring-based mechanical actuator or a wide variety of other actuators. In the example shown in FIG. 5 a rod 130 is coupled to a parallel linkage 132 and is used to exert an additional downforce (in the direction indicated by arrow 134) on row unit 106. The total downforce (which includes the force indicated by arrow 134 exerted by actuator 126, plus the force due to gravity acting on row unit 106 (and indicated by arrow 136) is offset by upwardly directed forces acting on closing wheels 118 (from ground 138) and disc opener 114 (again from ground 138). The remaining force (the sum of the force vectors indicated by arrows 134 and 136, minus the upward force on closing wheels 118 and opener 114 and the force on any other ground engaging component on the row unit (not shown), is the differential force. The differential force may also be referred to herein as the downforce margin. The downforce margin acts on the gauge wheels 116. This load can be sensed by a gauge wheel load sensor, which may be located anywhere on row unit 106 where it can sense that load. The gauge wheel load sensor can also be placed where it may not sense the load directly, but a characteristic indicative of that load. For example, the gauge wheel load sensor can be disposed near a set of gauge wheel control arms (or gauge wheel arm) 148 that movably mount gauge wheels 116 to shank 152 and control an offset between gauge wheels 116 and the discs in double disc opener 114, to control planting depth.

Arms (or gauge wheel arms) 148 illustratively abut against a mechanical stop (or arm contact member-or wedge) 150. The position of mechanical stop 150 relative to shank 152 can be set by a planting depth actuator assembly 154. Control arms 148 illustratively pivot around pivot point 156 so that, as planting depth actuator assembly 154 actuates to change the position of mechanical stop 150, the relative position of gauge wheels 116, relative to the double disc opener 114, changes, to change the depth at which seeds are planted.

In operation, row unit 106 travels generally in the direction indicated by arrow 160. The double disc opener 114 opens a furrow 162 in the soil 138, and the depth of the furrow 162 is set by planting depth actuator assembly 154, which, itself, controls the offset between the lowest parts of gauge wheels 116 and disc opener 114. Seeds are dropped through seed tube 120, into the furrow 162 and closing wheels 118 close the furrow 162, e.g., push soil back into the furrow 162.

As the seeds are dropped through seed tube 120, the seeds can be sensed by seed sensor 122. Some examples of seed sensor 122 are described in greater detail below. Some examples of seed sensor 122 may include an optical or reflective sensor, which includes a radiation transmitter component and a receiver component. The transmitter component emits electro-magnetic radiation, and the receiver component then detects the radiation and generates a signal indicative of the presence or absence of a seed adjacent to the sensor. In another example, row unit 106 may be provided with a seed firmer that is positioned to travel through the furrow 162, after seeds are placed in furrow 162, to firm the seeds in place. A seed sensor can be placed on the seed firmer and generate a sensor signal indicative of a seed.

The present description proceeds with respect to the seed sensor being located to sense a seed passing it in seed tube 120, but this is for the sake of example only. Material application control system 113 illustratively receives a signal from seed sensor 122, indicating that a seed is passing sensor 122 in seed tube 120. Where an intermittent application pattern is used, system 113 then determines when to actuate applicators 109 so that material being applied through application assembly 117 (and out distal tip 119 of application assembly 117) will be applied at a desired location relative to the seed in trench or furrow 162. One brief example of the operation will be described now, by way of overview.

Material application control system 113 illustratively is programmed with, or detects a distance, e.g., a longitudinal distance, that the distal tip 119 is from the exit end 121 of seed tube 120. System 113 also illustratively senses, or is provided (e.g., by another component, such as a GPS unit or a tractor, etc.), the ground speed of row unit 106. As the row units 106 on an implement being towed by a prime mover (e.g., a tractor) may move faster or slower than the tractor during turns, particularly as the width of the implement increases, the material application control system 113 may sense, compute, or be provided the ground speed of each row unit 106 of the implement. By way of example, the material application control system 113 may sense or be provided information when the implement is turning right indicating that the rightmost row unit 106 is travelling slower, i.e., has a lower ground speed, than the leftmost row unit 106. Further, the material application control system 113 detects, is provided, or is programmed with, system data indicating the responsiveness of applicators 109 under certain conditions (such as under certain temperature conditions, certain humidity conditions, certain elevations, when spraying a certain type of fluid, etc.) and the spray angle of applicators 109, (such as the size and orientation of the spray pattern emitted by applicator 109), and system 113 also detects, is provided, or programmed with one or more properties of the material being applied through applicators 109 (as this may affect the speed at which applicators 109 respond, the time it takes for the material to travel through application assembly 117 to the distal tip 119 and be applied to furrow 162, etc.). Further, material application control system 113 illustratively detects (or is provided with a sensor signal indicative of) the forward speed of row unit 106 in the direction generally indicated by arrow 160. Application control system 113 can also obtain information indicative of the duty cycle used to control applicator 109.

With this type of information, once system 113 receives a seed sensor signal indicating that a seed is passing sensor 122 in seed tube 120, system 113 determines the amount of time it will take for the seed to drop through the outlet end of seed tube 120 and into furrow 162 to reside at its final seed location and position in furrow 162. System 113 then determines when tip 119 will be in a desired location relative to that final seed location and actuates applicators 109 using a pulse width modulated control signal with a switching frequency (given the signal duty cycle) that will apply the material at the desired location. By way of example, it may be that some material is to be applied directly on the seed. In that case, system 113 times the actuation of applicators 109 so that the applied material will be applied at the seed location. In another example, it may be desirable to apply some material at the seed location and also a predetermined distance on either side of the seed location along the furrow. In that case, system 113 generates the control signal used to control applicators 109 at a switching frequency and timing so that the material is applied in the desired fashion. In other examples, it may be that the material is to be applied at a location between seeds in furrow 162. By way of example, relatively high nitrogen fertilizer may be most desirably applied between seeds, instead of directly on the seed. In that case, system 113 has illustratively been programmed with the desired location of the applied material, relative to seed location, so that system 113 can determine when, and at what frequency, to generate the control signal to actuate the control valves 300 in applicators 109 in order to apply the material between seeds. Further, as discussed above, the valves 300 in applicators 109 can be actuated to dispense material at a varying rate. Applicators 109 can dispense more material on the seed location and less at locations spaced from the seed location, or vice versa, or according to other application patterns. Different applicators 109 on the same row unit 106 can apply the same or different materials according to the same or different application patterns.

It will be noted that a wide variety of different configurations are contemplated herein. For instance, in one example, applicators 109 may each have a valve 300 that is provided with material through a separate supply line 111 and may have a separate distal spray tip or nozzle 119. The valve 300 in each applicator 109 may be placed closer to the distal spray tip or nozzle 119 (such as indicated by applicator locations 109A and 109C). In this way, there is less uncertainty as to how long it will take the material to travel from the valves 300 in applicators 109A and 109C to the corresponding distal spray tip or nozzle 119. In yet another example, the valves 300 in applicators 109 are disposed at a different location (such as on seed tube 120) as indicated by applicators 109B and 109D. In those scenarios, again, applicator locations 109B and 109D are closer to the corresponding distal spray tip or nozzle 119B and the material may be applied before and/or after the seed drops into furrow 162. For instance, when seed sensor 120 detects a seed, system 113 may be able to actuate the valve 300 in applicator 109B to apply material to furrow 162, before the seed exits the exit end 121 of seed tube 120 while continuously actuating a separate valve 300 in applicator 109D which is fed material by a separate supply line 111 from applicator 109B. However, by the time the seed drops through distal end 121 of seed tube 120, the final seed location may be directly on the material applied by applicator 109B. In yet another example, system 113 can control the valve 300 in applicator 109B so that it applies material, but then stops applying it before the seed exits distal end 121, again while actuating the valve 300 in applicator 109D to continuously apply material. In that case, the material may be applied continuously in the furrow 162 by applicator 109D and at a location behind the seed in furrow 162, relative to the direction indicated by arrow 160, by applicator 109B. This actuation timing and frequency enables the one or more materials to be applied between seeds, on seeds, continuously, overlapping, and/or elsewhere. All of these and other configurations are contemplated herein.

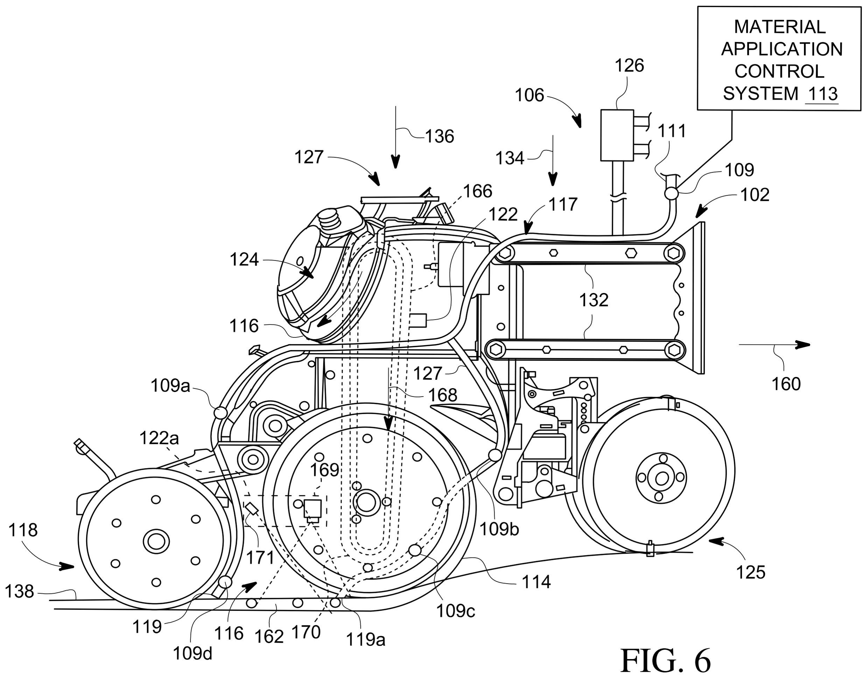

At least some of the applicator(s) 109 have a valve output pressure sensor 306 that senses the pressure downstream of the valve 300 or the pressure drop across the valve 300 or other pressure in an applicator 109. One or more of the applicators 109 on one or more of the row units 106 have a flow meter 320 that measures material applied by the applicator 109 and provides an output signal indicative of the measured material. The sensor signal(s) and flow meter output signal(s) are provided back to system 113 which generates an output indicative of whether spray tip 119 is blocked, partially blocked, missing, or operating properly, as described in greater detail elsewhere. FIG. 6 is similar to FIG. 5, and similar items are similarly numbered. However, instead of the seed delivery system being a seed tube 120, which relies on gravity to move the seed to the furrow 162, the seed delivery system shown in FIG. 6 is an assistive seed delivery system 166. Also, FIG. 6 shows that row unit 106 has row cleaner 125 which clears residue and other material ahead of opener 114. In FIG. 6, row unit 106 also has a seed hopper 127 that provides seed to seed meter 124. Assistive seed delivery system 166 also illustratively has a seed sensor 122 disposed therein. Assistive seed delivery system 166 captures the seeds as they leave seed meter 124 and moves them in the direction indicated by arrow 168 toward furrow 162. System 166 has an outlet end 170 where the seeds exit assistive system 166, into furrow 162, where they again reach their final resting location.

FIG. 6 also shows that row unit 106 may have an optical seed sensor 122A (in addition to, or instead of, seed sensor 122) with an image capture device 169 and an illumination source 171. When the seeds are dropped into the furrow 162, the seeds can be sensed by seed sensor 122A. Illumination source 142 may direct illumination onto an area of furrow 162. Camera 169 captures an image (or a sequence of images) of the illuminated area. An image processing system (located on sensor 122A, material application control system 113, at a remote location, and/or elsewhere) processes the image(s) to identify planting characteristics, such as seed location, seed type, seed orientation, seed (or furrow) depth, seed spacing, seed-to-soil contact, furrow integrity, anomalous material (such as rocks, plant matter, etc.), and/or other planting characteristics. The optical seed sensor 122A can be placed in a variety of different locations on row unit 106, or on different components of row unit 106, to obtain an image (or a sequence of images) of seeds in the furrow 162.

In a system where seed sensor 122 is used, material application control system 113 considers the speed at which delivery system 166 moves the seed from seed sensor 122 to the exit end 170. The system 113 also illustratively considers the speed at which the seed moves from the exit end 170 into furrow 162. For instance, in one example the seed simply drops from exit end 170 into furrow 162 under the force of gravity. In another example, however, the seed can be ejected from delivery system 166 at a greater or lesser speed than that which would be reached under the force of gravity. Similarly, it may be that the seed drops straight downward into furrow 162 from the outlet end 170. In another example, however, it may be that the seed is propelled slightly rearwardly from the outlet end 170, to accommodate for the forward motion of the row unit 106, so that the travel path of the seed is more vertical and so the seed rolls less once it reaches the furrow. Further, the seed can be ejected rearwardly and trapped against the ground by a trailing member (such as a pinch wheel) which functions to stop any rearward movement of the seed, after ejection, and to force the seed into firm engagement with the ground.

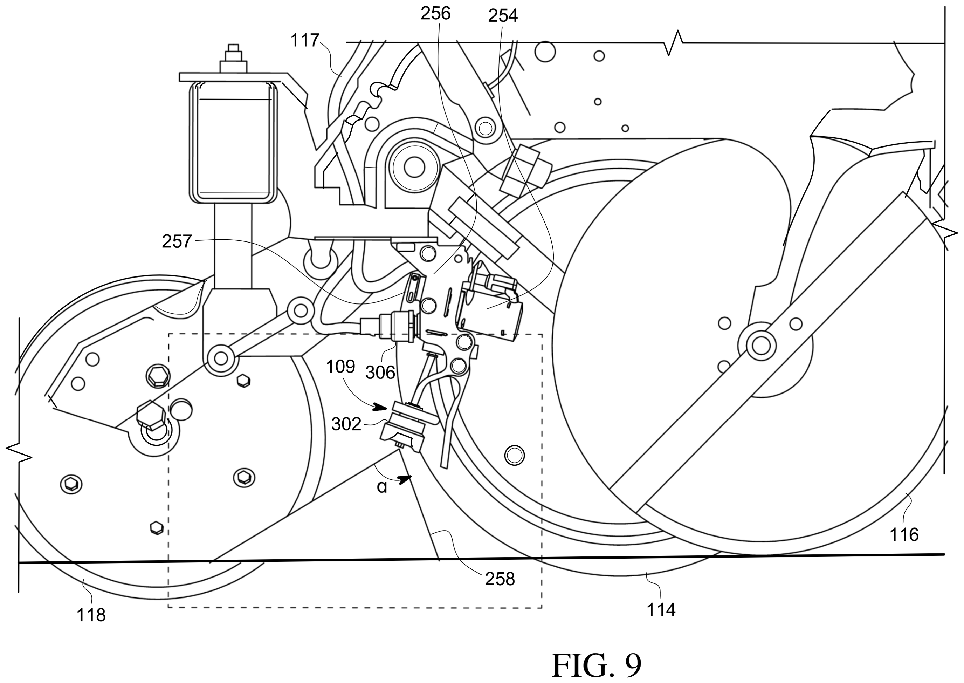

Again, FIG. 6 also shows that a plurality of applicators 109 can be placed at any of a wide variety of different locations, some of which are illustrated by numbers 109A, 109B, 109C, and 109D. In another example, as discussed in greater detail below with respect to FIG. 9, an applicator 109 can be mounted in place of or closely proximate device 169.

Where optical seed sensor 122A is used, material application control system 113 illustratively receives a signal from seed sensor 122A, indicating the planting characteristics discussed above, or other planting characteristics. Material application control system 113 can also receive a ground speed signal indicative of a speed of movement of row unit 106, and then determines when, and at what frequency, to independently actuate the different actuators in the applicators 109 on row unit 106 so that material being applied through application assemblies 117 (and out distal tips 119 of application assemblies 117) will be applied at a desired location relative to the seed in trench or furrow 162, or according to a desired application pattern, and/or based on other planting characteristics identified by processing the image(s) captured by optical seed sensor 122A. There can be more than one seed sensor, seed sensors of different types, different locations for seed sensors, etc.

At least some of the applicator(s) 109 have a valve output pressure sensor 306 that senses the pressure downstream of the valve 300 or the pressure drop across the valve or other pressure on an applicator 109. One or more of the applicators 109 on one or more of the row units 106 have a flow meter 320 that measures material applied by the applicator 109 and provides an output signal indicative of the measured material. The sensor signal(s) and flow meter output signal(s) are provided back to system 113 which generates an output indicative of whether spray tip 119 (i.e., exit orifice 302) is blocked, partially blocked, missing, or operating properly, as described in greater detail elsewhere.

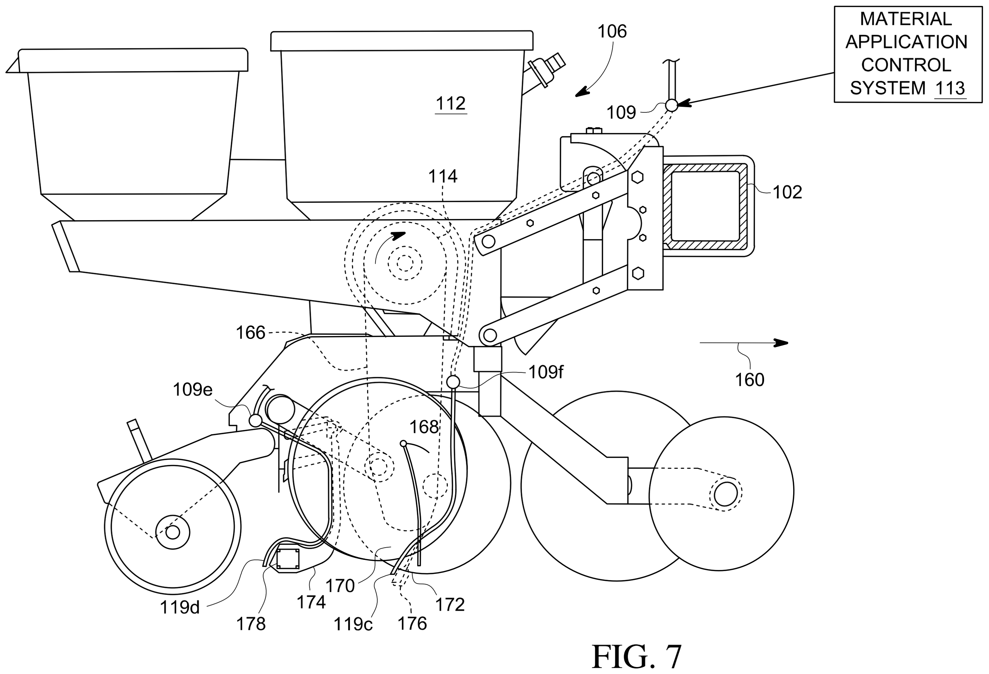

FIG. 7 is similar to FIG. 6 and similar items are similarly numbered. However, in FIG. 7, row unit 106 is also provided with members 172 and/or 174. Members 172 and/or 174 can be spring biased into engagement with the soil, or rigidly attached to the frame of row unit 106. In one example, member 172 can be a furrow shaper, which contacts the soil in the area within or closely proximate the furrow, and immediately after the furrow is opened, but before the seed is placed therein. Member 172 can thus contact the side(s) of the furrow, the bottom of the furrow, an area adjacent the furrow, or other areas. It can be fitted with a sensor 176, e.g., seed sensor 176, as well.

In another example, member 172 can be positioned so that member 172 moves through the furrow after the seed is placed in the furrow. In such an example, member 172 may act as a seed firmer, which firms the seed into its final seed location.

In either case, member 172 can include a seed sensor 122, which senses the presence of the seed. Seed sensor 122 may be an optical sensor, which optically senses the seed presence as member 172 moves adjacent to, ahead of, or over the seed. Sensor 122 may be a mechanical sensor that senses the seed presence, or sensor 122 may be another type of sensor that senses the presence of the seed in the furrow. Sensor 122 illustratively provides a signal to material application control system 113 indicating the presence of the sensed seed.

In such an example, it may be that the plurality of applicators 109 on the row unit 106 are placed at the location of applicator 109E, shown in FIG. 7, and the spray tip or nozzle 302 of the application assemblies corresponding to each applicator is shown at 119C. In the example shown in FIG. 7, outlet ends or nozzles 119C can be located closely behind member 172 relative to the direction indicated by arrow 160. Outlet ends or nozzles 119C can be disposed on the opposite side of member 172 as well (such as forward of member 172 in the direction indicated by arrow 160). In such an example, the seed sensor 122 senses the seed at a location that corresponds to its final seed location, or that is very closely proximate its final seed location. This location may increase the accuracy with which seed sensor 122 senses the final seed location.

Also, in the example shown in FIG. 7 row unit 106 can have member 174 in addition to, or instead of, member 172. Member 174 can also be configured to engage the soil within, or closely proximate, the trench or furrow. Member 174 can have a seed sensor 122 that senses the presence of a seed (or a characteristic from which seed presence can be derived). Member 174 can be placed so that it closely follows the exit end 121 of the seed tube 120, or the exit end 170 of the assistive delivery system 166. Also, applicators 109 (or valves 300 or other portions of applicators 109) can be placed at the position illustrated at 109F.

At least some of the applicator(s) 109 have a valve output pressure sensor 306 that senses the pressure downstream of the valve 300 or the pressure drop across the valve 300 or other pressure in an applicator 109. One or more of the applicators 109 on one or more of the row units 106 have a flow meter 320 that measures material applied by the applicator 109 and provides an output signal indicative of the measured material. The sensor signal(s) and flow meter output signal(s) are provided back to system 113 which generates an output indicative of whether spray tip 119 (or exit orifice 302) is blocked, partially blocked, missing, or operating properly, as described in greater detail elsewhere.

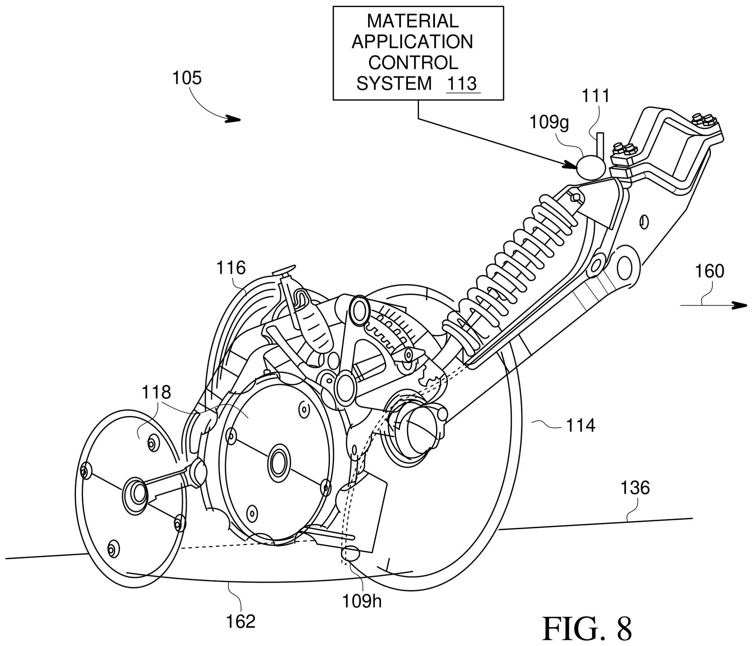

FIG. 8 is a side perspective view of an applicator unit 105. Some items are similar to those shown in other FIGS. and these items are similarly numbered. Briefly, in operation, applicator unit 105 attaches to a side-dress bar that is towed behind a towing vehicle 94, so unit 105 travels between rows (if the rows are already planted). However, instead of planting seeds, applicator unit 105 applies material at a location between rows of seeds (or, if the seeds are not yet planted, between locations where the rows will be, after planting). When traveling in the direction indicated by arrow 160, disc opener 114 (in this example, it is a single disc opener) opens furrow 162 in the ground 136, at a depth set by gauge wheel 116. Applicator unit 105 can have a plurality of independently controllable applicators 109. When applicators 109 are actuated, material is applied in the furrow 162 and closing wheels 118 then close the furrow 162.

As unit 105 moves, material application control system 113 controls applicators 109 to dispense material. This can be done relative to seed or plant locations, if those locations are sensed or are already known or have been estimated. Application can also be done before the seed or plant locations are known. In this latter scenario, the locations where the material is applied can be stored so that seeds can be planted later, relative to the locations of the material that has been already dispensed.

FIG. 8 shows that applicators 109, or components of applicators 109, can be mounted to any of a plurality of different positions on unit 105. Two of the positions are shown at 109G and 109H. These are examples and the applicators 109 can be located elsewhere as well. Similarly, multiple applicators 109 can be disposed on unit 105 at different locations, or adjacent one another, to dispense multiple different materials or to dispense material in a more rapid or more voluminous way or to dispense the same material at different rates or according to different application patterns. At least some of the applicator(s) 109 have a valve output pressure sensor 306 that senses the pressure downstream of the valve 300 or the pressure drop across the valve 300 or other pressure in an applicator 109. One or more of the applicators 109 on one or more of the row units 106 have a flow meter 320 that measures material applied by the applicator and provides an output signal indicative of the measured material. The sensor signal(s) and flow meter output signal(s) are provided back to system 113 which generates an output indicative of whether spray tip 119 (or nozzle 302) is blocked, partially blocked, missing, or operating properly, as described in greater detail elsewhere.

FIG. 9 shows an enlarged view of a portion of row unit 106 illustrated in FIG. 6, and similar items are similarly numbered. In FIG. 9, applicator 109 is shown having a spray tip or nozzle 302 and a valve actuator 254 that actuates a valve 300 within housing 256. The valve 300 is fed liquid material through a flow inlet 257 coupled to a conduit in application assembly 117. When actuator 254 is actuated to open the valve 300, liquid material passes through the conduit in application assembly 117, through the valve 300, and out through nozzle 302. In the example shown in FIG. 9, nozzle 302 generates a spray pattern indicated by number 258. The spray pattern spreads over a spray angle α. FIG. 9 also shows valve output pressure sensor 306 positioned to sense fluid pressure downstream of valve 300.

When configured as shown in FIG. 9, at least some of the applicator(s) 109 have a valve output pressure sensor 306 that senses the pressure downstream of the valve 300 or the pressure drop across the valve 300 or other pressure in applicator 109. One or more of the applicators 109 on one or more of the row units 106 have a flow meter 320 that measures material applied by the applicator 109 and provides an output signal indicative of the measured material. The sensor signal(s) and flow meter output signal(s) are provided back to system 113 which generates an output indicative of whether nozzle 302 (or spray tip 119) is blocked, partially blocked, missing, or operating properly, as described in greater detail elsewhere.

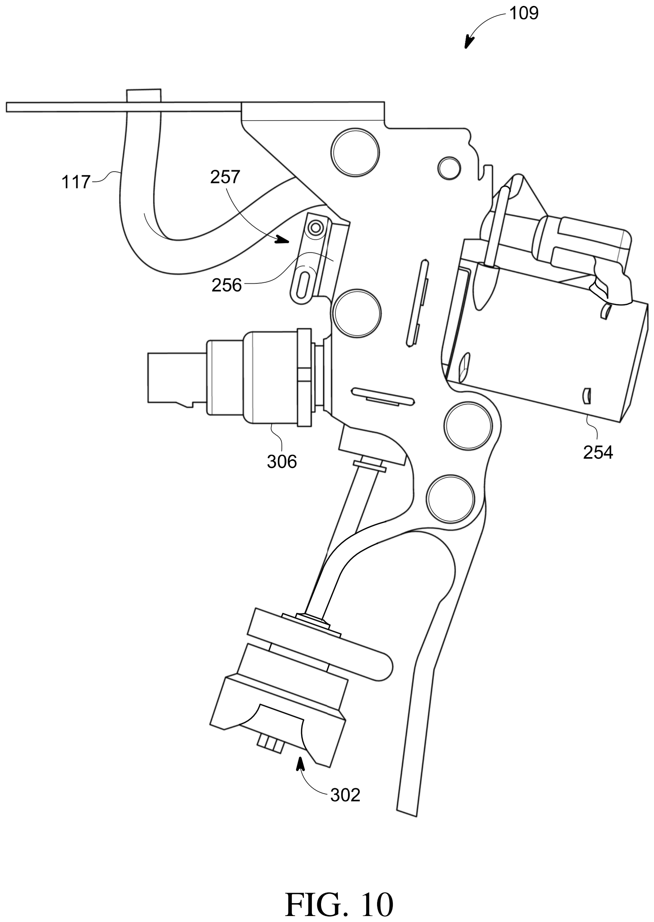

FIG. 10 is an enlarged view of applicator 109 showing flow inlet 257, valve housing 256, and actuator 254, as well as spray tip or exit orifice 302 and pressure sensor 306. It may happen that, because of the location of applicator 109 and the environment in which applicator 109 operates liquid and dust or debris can accumulate on spray tip or exit orifice 302 and block or partially block the spray tip or exit orifice 302. Similarly, spray tip or exit orifice 302 may become damaged or get knocked off or broken off applicator 109 resulting in unrestricted flow between valve 300 in valve housing 256 and the outlet end of applicator 109. Therefore, at least some of applicators 109 have valve output pressure sensor 306 may be disposed between valve 300/housing 256 and the nozzle or spray tip or exit orifice 302. The sensed pressure will change in response to actuation of valve 300 and in response to a blockage or partial blockage of spray tip or exit orifice 302 and/or in response to spray tip or exit orifice 302 being damaged or missing. One or more of the applicators 109 on one or more of the row units 106 have a flow meter 320, instead of or in addition to pressure sensor 306, that measures material applied by the applicator 109 and provides an output signal indicative of the measured material. The sensor signal(s) and flow meter output signal(s) are provided back to system 113 which generates an output indicative of whether spray tip or exit orifice 302 is blocked, partially blocked, missing, or operating properly, as described in greater detail elsewhere.

A classifier or other applicator state detection system in system 113 can thus detect the state of applicator 109 based on the pressure signals from sensor 306 and the flow meter signal from flow meter 320 and a control signal generator can generate a corresponding control signal.

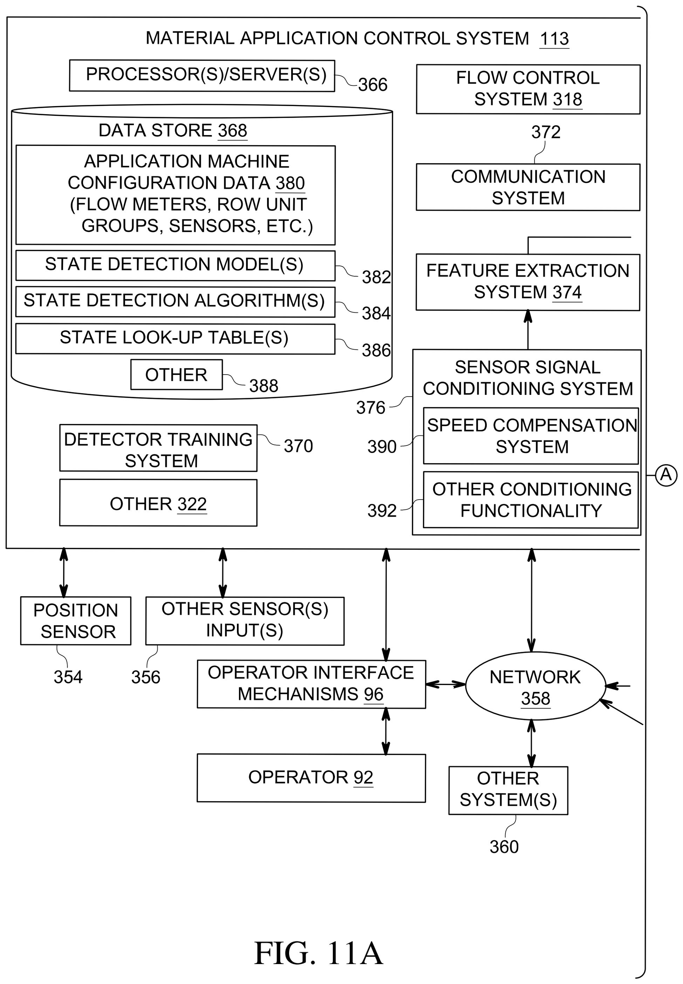

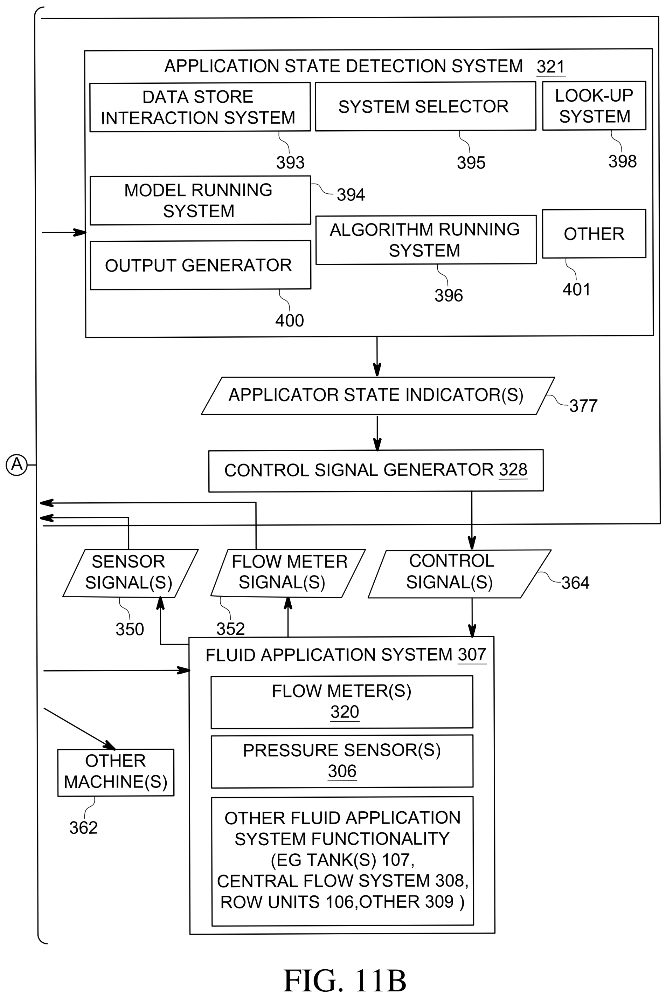

FIGS. 11A and 11B are collectively referred to herein as FIG. 11. FIG. 11 is a block diagram showing one example of material application control system 113 in more detail. Some items are similar to those shown in previous figures, and they are similarly numbered. FIG. 11 shows that material application control system 113 receives one or more pressure signals 350 (such as pressure sensor signals generated by pressure sensors 306 in fluid application system 307) as well as one or more flow meter signals 352 generated by one or more flowmeters 320 in fluid application system 307. Similarly, FIG. 11 shows that material application control system 113 can receive inputs from a position sensor 354 and a variety of other sensors or inputs 356. Material application control system 113 can also be in communication with operator interface mechanisms 96 either directly or over a network 358. Further, material application control system 113 can communicate with other systems 360 and/or other machines 362 over network 358 or in other ways. Based upon the various inputs, material application control system 113 identifies a state of each of the applicators 109 in fluid application system 307 (e.g., the state of each of the applicators 109 on each of the row units 106) and can generate control signals 364 based upon the detected applicator state. The control signals 364 may be provided to fluid application system 307, to flow control system 318, to operator interface mechanisms 96, to other systems 360, and/or to other machines 362.

In the example shown in FIG. 11, material application control system 113 includes one or more processors or servers 366, data store 368, detector training system 370, flow control system 318, application state detection system 321, communication system 372, feature extraction system 374, sensor signal conditioning system 376, control signal generator 378, and other items 322. Data store 368 can include application machine configuration data 380. Such data can identify the number and location of the flowmeters 320 on the application machine, the number and location of pressure sensors or other sensors on the application machine, the number and grouping of row units 106, or any of wide variety of other configuration data. Data store 368 can also include one or more state detection models 382, state detection algorithms 384, and/or state lookup tables 386, as well as other items 388. Sensor signal conditioning system 376 can include speed compensation system 390, and any of a wide variety of other conditioning functionality 392. Application state detection system 321 can include data store interaction system 391, model running system 394, system selector 395, algorithm running system 396, look-up system 398, output generator 400, and other items 401. Before describing the operation of material application control system 113 in more detail, a description of some of the items in material application control system 113, and their operation, will first be provided.

Position sensor 354 illustratively provides an output indicative of the location of position sensor 354 in a local or global coordinate system. Therefore, position sensor 354 may be a global navigation satellite system (GNSS) receiver, a dead reckoning system, a cellular triangulation system, inertial measurement units or accelerometers, or other positions sensors.

Network 358 may be a wide area network, a local area network, cellular communication network, a Wi-Fi or Bluetooth network, a near field communication network, or any of wide variety of other networks or combinations of networks.

Other systems 360 can include farm manager systems, vendor systems, maintenance systems, cloud-based systems or any of wide variety of other systems. Other machines 362 can include towing vehicle 94, tender vehicles, other planting machines, and/or any of wide variety of other machines.

Some examples of application machine configuration data 380 were described above. State detection models 382 can be static or dynamic models which may include machine learning models, such as artificial neural networks, artificial intelligence (AI) classifiers, or other models. State detection models 382 are trained by detector training system 370 to receive inputs from sensors, such as sensor signal 350, flow meter signal 352, and/or features extracted from those signals, as well as any other sensor signals or other inputs and generate an output indicative of the state of each applicator 109 under consideration. The state may identify that the applicator is blocked, partially blocked, has unrestricted flow (e.g., that the spray tip 302 is missing), or is applying material normally or as desired. State detection algorithms 384 can be rules-based algorithms or other algorithms that are trained or configured by detector training system 370 to receive sensor signals 350, flow meter signals 352, and/or any features extracted from those signals and/or other inputs and generate an output indicative of the state of each of the applicators 109 under consideration. State look-up tables 386 are populated by detector training system 370 with values that identify the state of an applicator 109 given the inputs from the various sensors, such as from the sensor signals 350, flow meter signals 352, inputs from other sensors, features extracted from those sensor signals, etc. It will be noted that, there may be a plurality of state detection models 382, a plurality of state detection algorithms 384, and/or a plurality of state look-up tables 386. Each of the models, algorithms, or tables may correspond to a particular application machine configuration, such as identified by application machine configuration data 380. Similarly, the different models, algorithms, and/or tables may correspond to different makes or models of application machines, different types of row units, different makes or models of flow control valves, pressure sensors, spray tips, flowmeters, etc. Therefore, a particular state detection model 382, a particular state detection algorithm 384, or a particular state look-up table 386 may be selected based upon the application machine configuration data 380, or in other ways.

Detector training system 370 may be a training system that trains state detection models 382, that configures state detection algorithms 384 with appropriate coefficient values, terms, etc., and/or that populates the state look-up tables 386. Detector training system 370 may include supervised or unsupervised training systems, a statistical inference type training system, or a system that employs other types of learning techniques. Detector training system 370 may be located in another system 360, such as in a cloud-based system, or elsewhere.

Flow control system 318 illustratively provides an output to control signal generator 378 to generate control signals to control the flow control valves 300 on applicators 109 in fluid application system 307 based upon a target application rate, the type of spray tip or exit orifice 302, and/or other data. Flow control system 318 may control the flow control valves 300 in applicators 109 to provide application of material according to a target rate, a target application pattern, or other target data. The control signals can take other forms as well.

Communication system 372 facilitates the communication of items in material application control system 113 with one another and may facilitate communication with other systems 360 or other machines 362 directly or over network 358. Therefore, communication system 350 may be a controller area network (CAN) bus and bus controller, a cellular communication system, a near field communication system, a Bluetooth or Wi-Fi communication system, a wide area network communication system, a local area network communication system, or any of a wide variety of other communication systems or combinations of systems.

Sensor signal conditioning system 376 may receive input signals from various different sensors. Sensor signal conditioning system 376 can perform any of a wide variety of other conditioning on those signals, such as amplification, normalization, aggregation, filtering, and/or other conditioning. Speed compensation system 390 may process the sensor signals based upon the ground speed of the row unit 106 from which the sensor signal is derived. For instance, when machine 100 is making a turn, the row units 106 on the outer side of the turn may be traveling at a higher ground speed than the row units 106 on the inner side of the turn. Therefore, the sensor signals 350 from the pressure sensors and/or the flow meter signals 352 from the flowmeters may be conditioned in different ways (e.g., they may be aggregated differently, filter differently, etc.). The ground speed of the different row units 106 may be detected using speed sensors on each row unit 106 or using a ground speed sensor on one portion of machine 100, and calculating the speed of each row unit 106 based upon the route of machine 100 and the ground speed output by the speed sensor.

Feature extraction system 374 can obtain the various sensor signals, and other inputs from the sensors on individual applicators 109 or sets of applicators 109 and extract features that may be useful to application state detection system 321. Thus, feature extraction system 374 can analyze the pressure pulses (or pressure signals) 350 from the various pressure sensors 306 and the flow meter signals 352 from the various flow meters 320, to identify pulse characterization features. Such features may indicate the graphical area corresponding to different portions of the pressure pulse defined by the pressure signals 350, any overshoot or undershoot in the pressure pulses, characteristics of the pressure signal decay, the steady state pressure level before the corresponding valve 300 is closed, the low pressure level or steady state pressure level before current is applied to the flow control valve 300 to open the valve, and/or any of a wide variety of other pulse characterization features. Thus, the extracted features may include such things as timing features (e.g., how quickly the sensor signal 350 decays, ramps up, stays at a particular level, the timing of spikes or troughs in the signals 350, etc.), magnitude features (based on the magnitude of the signals), computed or derived features (such a aggregated, processed or otherwise computed features). Feature extraction system 374 can extract one or more similar or different features from the flow meter signals 352.

Feature extraction can be performed using any of a wide variety of different types of feature extraction algorithms or models. Feature extraction can be performed by components such as classification algorithms, prediction algorithms, clustering algorithms, or other feature extraction algorithms. The features may be numerical, categorical, ordinal, binary, textual, or other features. Application state detection system 321 may receive signals 350 and 352 and/or features extracted from the signals 350 and 352 and detect the application state of one or more applicators 109 (such as whether the applicators 109 are functioning properly, partially blocked, fully blocked, have unrestricted flow - indicating that the spray tip 302 is missing, or other states). Data store interaction component 391 interacts with data store 368 to obtain data or other information needed by application state detection system 321 to identify the state of different applicators 109. Data store interaction component 391 can interact with local data store 368 or remote data stores using communication system 372 or in other ways. For instance, data store interaction system 391 can access application machine configuration data 380. Based on that data, system selector 395 selects which of the models, algorithms, and/or look-up tables will be used to identify the state of the applicators 109 given the sensor signals and extracted features. System selector 395 may be a rules-based system, a model, or another system that receives the application machine configuration data 380 as an input and generates an output indicative of which model 382, algorithm 384, and/or table 386 will be used.

Where the selected system is model running system 394, then model running system 394 is configured to run the state detection model 382 that is to be used to identify states. Where the model 382 is a machine learning model, the machine learning model 382 receives the features extracted by feature extraction system 374 as well as any or all the parameters and/or signals. Machine learning model 382 may receive other information (such as data from data store 368, the geographic position of the machine, the valve control signals generated by flow control system 318, and/or any of a wide variety of other information). Machine learning model 382 classifies the inputs to generate an output indicative of the state of one or more applicators 109 under analysis. The state of an applicator 109 under analysis may identify that the applicator 109 is blocked, partially blocked, missing a spray tip, functioning properly, etc. The classification may also identify that the flow rate of the material being applied by the applicator 109 as an absolute value, as above normal, normal, below normal, or classified in another way relative to the flow rate of other applicators 109 or relative to an expected flow rate.

Machine learning model 382 can include a neural network, a deep neural network, an artificial intelligence model (such as a large language model classifier), a rules-based classifier a rules-based classifier where the rules are generated by a neural network or large language model, or another type of classification algorithm or classification model.

Where the selected system is algorithm running system 396, algorithm running system 396 is configured to run the state detection algorithm 384 that is to be used to identify applicator states. The algorithm receives the signals and/or features and/or other data as inputs and generates an output indicative of the applicator state for the applicator(s) 109 under analysis.

Where the selected system is look-up system 398, then look-up system 398 accesses the state look-up table 386 that is to be used to identify applicators states. Look-up system 398 receives the sensor signals and/or features and/or other information and uses that information as inputs to index into a look-up table 386 to identify applicator states for the applicators 109 under analysis.

Output generator 400 receives the output from one or more of systems 394, 396, and/or 398 that identify the applicator states and generates an output of the applicator state indicators 377. The applicators state indicators 377 identify the applicator state corresponding to each of the applicators 109 under analysis.

Control signal generator 378 can generate a control signal 364 to control operator interface mechanisms 96. For instance, control signal generator 378 can generate a control signal 364 to control an operator interface output mechanism, such as a screen, an alarm, or any other mechanism for providing an audio, visual, or haptic output to an operator. The output may identify the applicator 109. The output may identify the state of a particular applicator 109. The output may identify a potential problem (such as a blocked applicator, a partially blocked applicator, an applicator where the spray tip is missing, etc.). The output may provide diagnostic or tutorial information identifying how an operator may verify and/or fix any corresponding problem. The output can include a wide variety of other outputs as well.

Control signal generator 378 may generate a control signal 364 to control one or more applicators 109 or other items in fluid application system 307. For instance, where an applicator 109 is partially blocked, the control signal may instruct flow control system 318 to increase the frequency with which the corresponding valve 300 is actuated in order to increase the flow rate from the applicator 109, even though it is partially blocked. The control signal may control flow control system 318 to reduce the frequency of actuation of a valve 300 where the applicator 109 is missing the spray tip 302. Other control signals for controlling applicator 109 can be generated as well.

Control signal generator 378 can generate a control signal to control central flow system 308. For instance, the control signal can be used to control pump 115 to increase or decrease system pressure, to stop pumping, or to control central flow system 308 in other ways.

Control signal generator 378 can generate control signals to control communication system 372 to communicate the state of the various applicators 109 to other systems 360, other machines 362, etc. For instance, where an applicator 109 is clogged or has a missing spray tip 302, control signal generator 378 may control the communication system 372 to communicate with a vendor indicating that a new spray tip 302 is needed to replace the damaged or missing spray tip. Control signal generator 378 can generate any of a wide variety of other control signals as well.

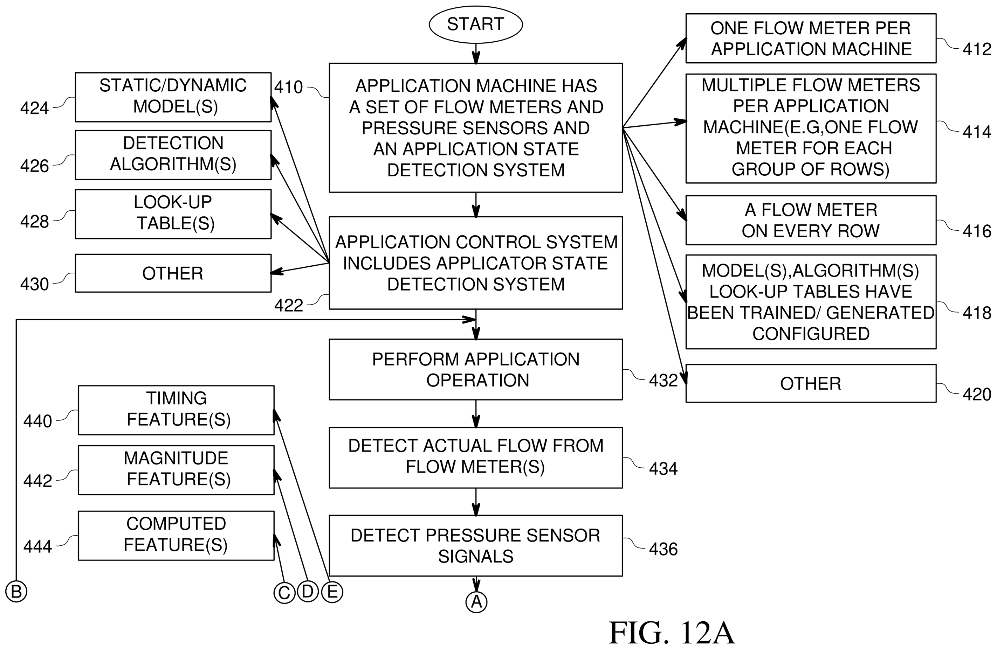

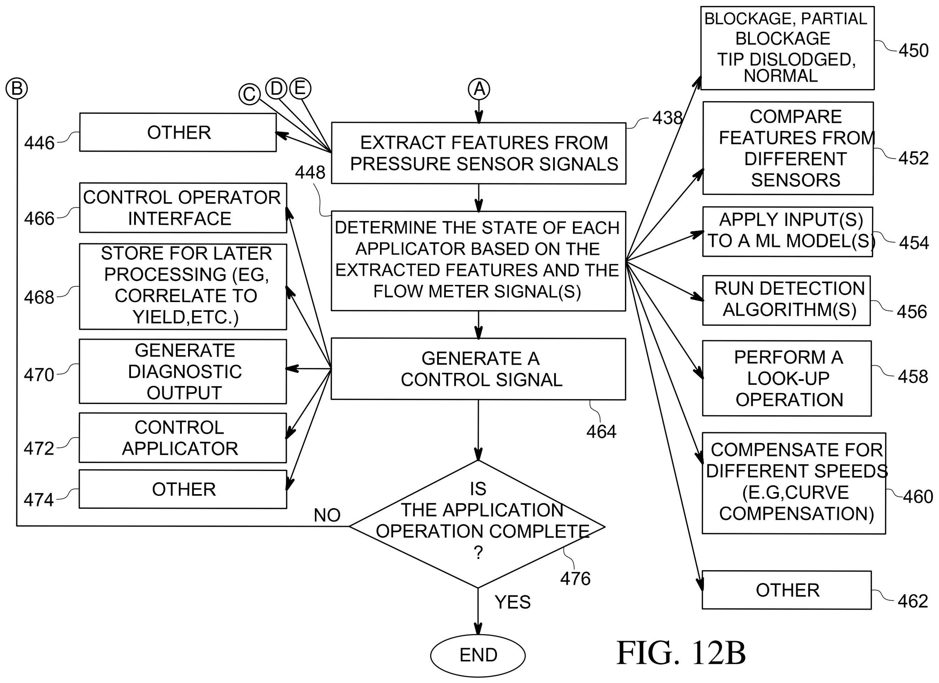

FIGS. 12A and 12B are collectively referred to herein as FIG. 12. FIG. 12 illustrates a flow diagram showing one example of the operation of material application control system 113 in identifying the state of one or more applicators 109 and generating control signals. It is first assumed that the liquid application machine 100 has a set of at least one or more flowmeters 320 and pressure sensors 306, as well as an application state detection system 321. Having the application machine 100 configured in this way as indicated by block 410 in the flow diagram of FIG. 12. In one configuration, there is one flowmeter 320 per application machine 100, as indicated by block 412. In another configuration, there are multiple flowmeters 320 per application machine 100 (e.g., one flow meter 320 for each group of row units 106, etc.) as indicated by block 414. In another configuration, there are one or more flow meters 320 on every row unit 106, as indicated by block 416 in the flow diagram of FIG 12. Further, in accordance with one configuration, the application state detection system 321 is configured with at least one state detection model 382, and/or at least one state detection algorithm 384, and/or at least one state look-up table 386 where the models, algorithms, and/or look-up tables have been trained, configured, and/or populated, as indicated by block 418 in the flow diagram of FIG. 12. The application machine 100 can be configured in other ways as well, as indicated by block 420.

Data store interaction system 394 detects or obtains machine configuration data 380 to identify the configuration of the application machine 100. Obtaining or detecting machine configuration data is indicated by block 422.

System selector 395 configures application state detection system 321 based upon the machine configuration, as indicated by block 424. For instance, system selector 395 can select which particular system 394, 396, and/or 398 to use and the particular model, algorithm, and/or look-up table that should be used.

Application machine 100 is then controlled to perform an application operation to apply material to the field, as indicated by block 432. The application operation can be performed under manual control, semi-automated control, or fully automated control.

The flow meter(s) 320 detects actual flow. The flow meter(s) 320 then generate flow meter signals 352 and provide those signals to material application control system 113, such as to sensor signal conditioning system 376, which conditions those signals. Detecting the flow meter signals 352 from the flow meters 320, where those signals are indicative of actual measured flow is indicated by block 434 in the flow diagram of FIG. 12. Material application control system 113 also receives the pressure sensor signals 350 from the pressure sensors 306. Those signals can be conditioned by sensor signal conditioning system 376 or processed in other ways as well. Receiving or detecting the pressure sensor signals as indicated by block 436 in the flow diagram of FIG. 12.

Feature extraction system 374 then extracts features from the pressure sensor signals 350 and/or the flow meter signals 352, as indicated by block 438. The features can include timing features 440, magnitude features 442, computed features 444, and/or any of a wide variety of other features 446. The extracted features and/or the sensor signals and/or any other information are then provided to application state detection system 321. Application state detection system 321 determines the state of each applicator 109 based upon the extracted features and/or the sensor signals 350 and flow meter signals 352. Determining the state of each applicator 109 is indicated by block 448 in the flow diagram of FIG. 12. The state can include a blocked state, a partially blocked state, a tip dislodged state, and/or a normal state or other states as indicated by block 450. In one example, the application state detection system 321 compares the features from the different pressure sensor signals 350 generated from the different pressure sensors 306 to determine how the pressure sensor signals 350 are varying across applicators 109. Such variation may be indicative of the applicator state. In another example, the signals and/or features are provided as an input to machine learning models 382, as indicated by block 454, which generates an output indicative of applicator state. In another example, application state detection system 321 runs and a state detection algorithm 384 to generate the state corresponding to each applicator 109. In yet another example, look-up system 398 performs a look-up operation as indicated by block 458, in order to identify the applicator state. Also, as discussed elsewhere herein, the applicator state can be compensated for different ground speeds, as indicated by block 460, and the applicator state can be determined in other ways, as indicated by block 462.

Output generator for hundred outputs the applicator state indicators 377 indicative of the state of each applicator 109 under consideration. Control signal generator 378 then generates control signals based upon the applicator state indicators 377. Outputting the applicator state indicator is indicated by block 463 and generating a control signal is indicated by block 464. The control signals can control an operator interface is indicated by block 466. The control signals can be output and stored for later processing is indicated by block 468. For instance, the blockage or applicator state data can be correlated to yield data during a subsequent harvesting operation. Other processing can be performed, and correlations can be drawn as well. The control signal can be used to generate a diagnostic or tutorial output as indicated by block 470 or to control the fluid application system 307, as indicated by block 472. Control signal generator 378 can generate other control signals as well, as indicated by block 474.

Until the application operation is complete, as determined at block 478, processing reverts to block 432 where the application operation is continued.

It can thus be seen that the present description describes a system that uses flow meters mounted on a subset of the applicators in the agricultural system. Pressure sensors or other sensors that sense a characteristic of the application operation are disposed on the remaining applicators. The flow meter signals are used in conjunction with the pressure sensor signals in order to identify the state of each applicator. This greatly enhances the ability of the system to detect application errors, while preserving efficiency.

The present discussion has mentioned processors and servers. In one example, the processors and servers include computer processors with associated memory and timing circuitry, not separately shown. The processors and servers are functional parts of the systems or devices to which they belong and are activated by and facilitate the functionality of the other components or items in those systems.

It will be noted that the above discussion has described a variety of different systems, components, generators, sensors, meters, and/or logic. It will be appreciated that such systems, components, generators, sensors, meters, and/or logic can be comprised of hardware items (such as processors and associated memory, or other processing components, some of which are described below) that perform the functions associated with those systems, components, generators, sensors, meters, and/or logic. In addition, the systems, components, generators, sensors, meters, and/or logic can be comprised of software that is loaded into a memory and is subsequently executed by a processor or server, or other computing component, as described below. The systems, components, generators, sensors, meters, and/or logic can also be comprised of different combinations of hardware, software, firmware, etc., some examples of which are described below. These are only some examples of different structures that can be used to form the systems, components, generators, sensors, meters, and/or logic described above. Other structures can be used as well.

Also, a number of user interface (UI) displays have been discussed. The UI can take a wide variety of different forms and can have a wide variety of different user actuatable input mechanisms disposed thereon. For instance, the user actuatable input mechanisms can be text boxes, check boxes, icons, links, drop-down menus, search boxes, etc. The mechanisms can also be actuated in a wide variety of different ways. For instance, they can be actuated using a point and click device (such as a track ball or mouse). The mechanisms can be actuated using hardware buttons, switches, a joystick or keyboard, thumb switches or thumb pads, etc. The mechanisms can also be actuated using a virtual keyboard or other virtual actuators. In addition, where the screen on which they are displayed is a touch sensitive screen, the mechanisms can be actuated using touch gestures. Also, where the device that displays the mechanisms has speech recognition components, the mechanisms can be actuated using speech commands.

A number of data stores have also been discussed. It will be noted the data stores can each be broken into multiple data stores. All can be local to the systems accessing them, all can be remote, or some can be local while others are remote. All of these configurations are contemplated herein. Also, the figures show a number of blocks with functionality ascribed to each block. It will be noted that fewer blocks can be used so the functionality is performed by fewer components. Also, more blocks can be used with the functionality distributed among more components.

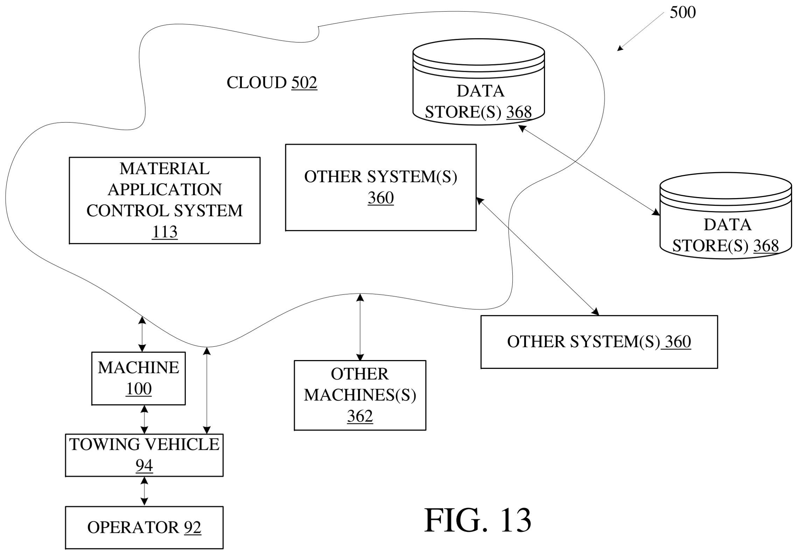

FIG. 13 is a block diagram of the architecture, shown in FIG. 1, except that planter 100 communicates with elements in a remote server architecture 500. In an example, remote server architecture 500 can provide computation, software, data access, and storage services that do not require end-user knowledge of the physical location or configuration of the system that delivers the services. In various examples, remote servers can deliver the services over a wide area network, such as the internet, using appropriate protocols. For instance, remote servers can deliver applications over a wide area network, and they can be accessed through a web browser or any other computing component. Software or components shown in other FIGs. as well as the corresponding data, can be stored on servers at a remote location. The computing resources in a remote server environment can be consolidated at a remote data center location or they can be dispersed. Remote server infrastructures can deliver services through shared data centers, even though they appear as a single point of access for the user. Thus, the components and functions described herein can be provided from a remote server at a remote location using a remote server architecture. Alternatively, the components and functions can be provided from a conventional server, or they can be installed on client devices directly, or in other ways.

In the example shown in FIG. 13, some items are similar to those shown in FIGS. 1-12 and they are similarly numbered. FIG. 13 specifically shows that material application control system 113 and data store 368, or other systems 360, or other items in agricultural system 90 can be located at a remote server location 502. Therefore, parts of system 113 can access those systems through remote server location 502. FIG. 13 also shows that other machines 362 and/or other systems 360 can communicate with remote server environment 502.

FIG. 13 also depicts another example of a remote server architecture. FIG. 13 shows that it is also contemplated that some elements of other FIGS. can be disposed at remote server location 500 while others are not. By way of example, data store 368 can be disposed at a location separate from location 500 and accessed through the remote server at location 500. Regardless of where the elements are located, the elements can be accessed directly by system 113, through a network (either a wide area network or a local area network), the elements can be hosted at a remote site by a service, or they can be provided as a service, or accessed by a connection service that resides in a remote location. Also, the data can be stored in substantially any location and intermittently accessed by, or forwarded to, interested parties. For instance, physical carriers can be used instead of, or in addition to, electromagnetic wave carriers. In such an example, where cell coverage is poor or nonexistent, another mobile machine (such as a fuel truck) can have an automated information collection system. As the planter or sprayer comes close to the fuel truck for fueling, the system automatically collects the information from the planter or sprayer using any type of ad-hoc wireless connection. The collected information can then be forwarded to the main network as the fuel truck reaches a location where there is cellular coverage (or other wireless coverage). For instance, the fuel truck may enter a covered location when traveling to fuel other machines or when at a main fuel storage location. All of these architectures are contemplated herein. Further, the information can be stored on the planter or sprayer until the planter or sprayer enters a covered location. The planter or sprayer, itself, can then send the information to the main network.

It will also be noted that the elements of other FIGS., or portions of them, can be disposed on a wide variety of different devices. Some of those devices include servers, desktop computers, laptop computers, tablet computers, or other mobile devices, such as palm top computers, cell phones, smart phones, multimedia players, personal digital assistants, etc.

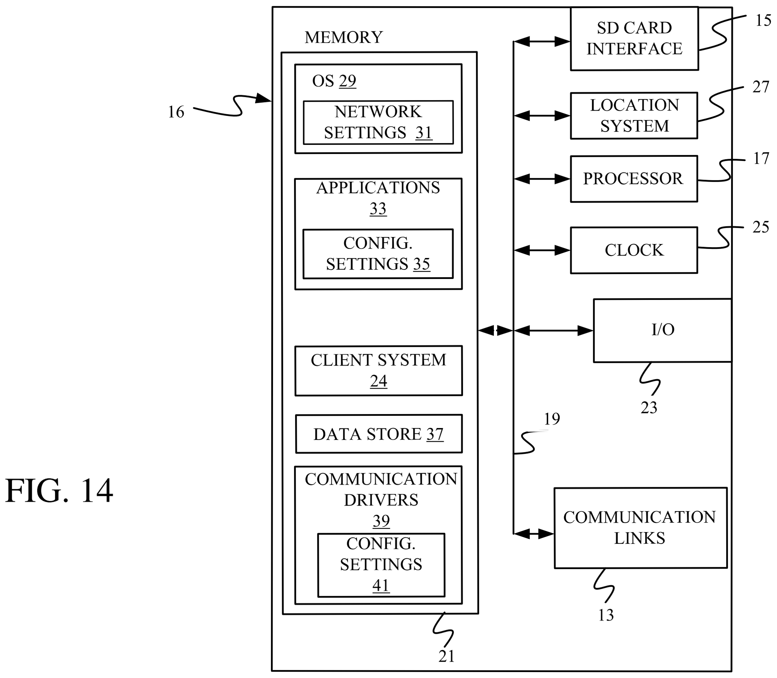

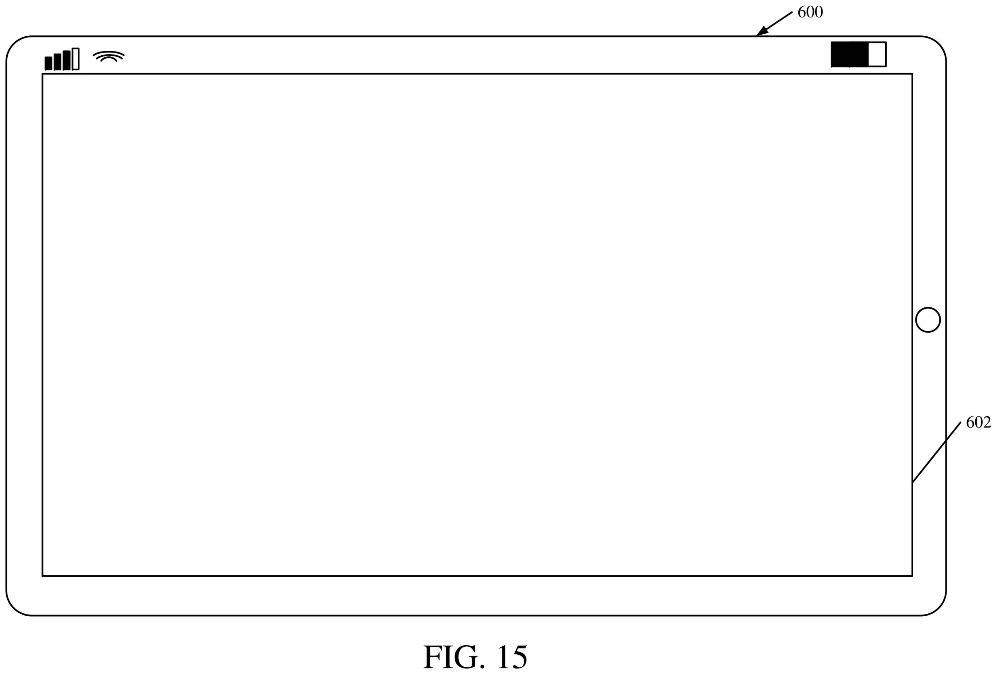

FIG. 14 is a simplified block diagram of one illustrative example of a handheld or mobile computing device that can be used as a user's or client's handheld device 16, in which the present system (or parts of it) can be deployed. For instance, a mobile device can be deployed in the operator compartment of towing vehicle 94 for use in generating, processing, or displaying the application data. FIGS. 15-16 are examples of handheld or mobile devices.

FIG. 14 provides a general block diagram of the components of a client device 16 that can run some components shown in other FIGS., that interact with those components, or both. In the device 16, a communications link 13 is provided that allows the handheld device to communicate with other computing devices and in some examples provides a channel for receiving information automatically, such as by scanning. Examples of communications link 13 include allowing communication though one or more communication protocols, such as wireless services used to provide cellular access to a network, as well as protocols that provide local wireless connections to networks.

In other examples, applications can be received on a removable Secure Digital (SD) card that is connected to an interface 15. Interface 15 and communication links 13 communicate with a processor 17 (which can also embody processors from previous FIGS.) along a bus 19 that is also connected to memory 21 and input/output (I/O) components 23, as well as clock 25 and location system 27.

I/O components 23, in one example, are provided to facilitate input and output operations. I/O components 23 for various examples of the device 16 can include input components such as buttons, touch sensors, optical sensors, microphones, touch screens, proximity sensors, accelerometers, orientation sensors and output components such as a display device, a speaker, and or a printer port. Other I/O components 23 can be used as well.

Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a GNSS, a dead reckoning system, a cellular triangulation system, or other positioning system. Location system 27 can also include, for example, mapping software or navigation software that generates desired maps, navigation routes and other geographic functions.

Memory 21 stores operating system 29, network settings 31, applications 33, application configuration settings 35, data store 37, communication drivers 39, and communication configuration settings 41. Memory 21 can include all types of tangible volatile and non-volatile computer-readable memory devices. Memory 21 can also include computer storage media (described below). Memory 21 stores computer readable instructions that, when executed by processor 17, cause the processor to perform computer-implemented steps or functions according to the instructions. Processor 17 can be activated by other components to facilitate their functionality as well.

FIG. 15 shows one example in which device 16 is a tablet computer 644. In FIG. 15, computer 644 is shown with user interface display screen 646. Screen 646 can be a touch screen or a pen-enabled interface that receives inputs from a pen or stylus. Computer 644 can also use an on-screen virtual keyboard. Of course, computer 644 might also be attached to a keyboard or other user input device through a suitable attachment mechanism, such as a wireless link or USB port, for instance. Computer 644 can also illustratively receive voice inputs as well.

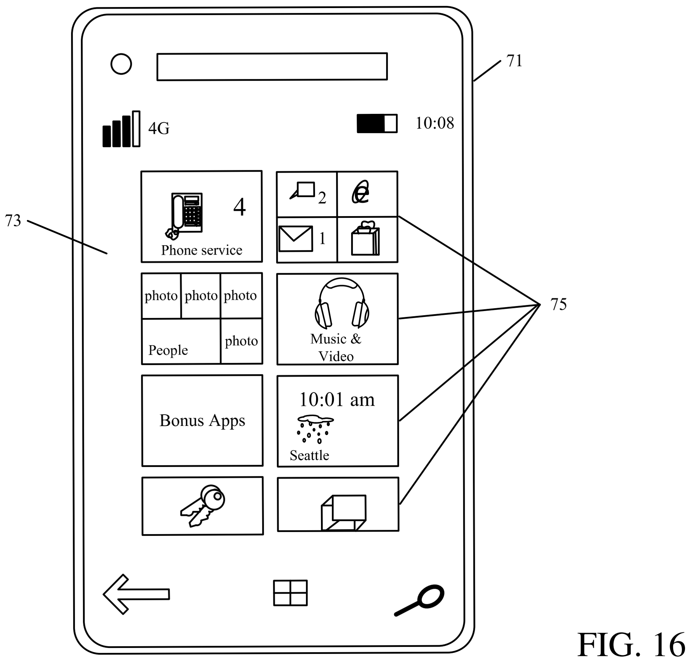

FIG. 16 shows that the device can be a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

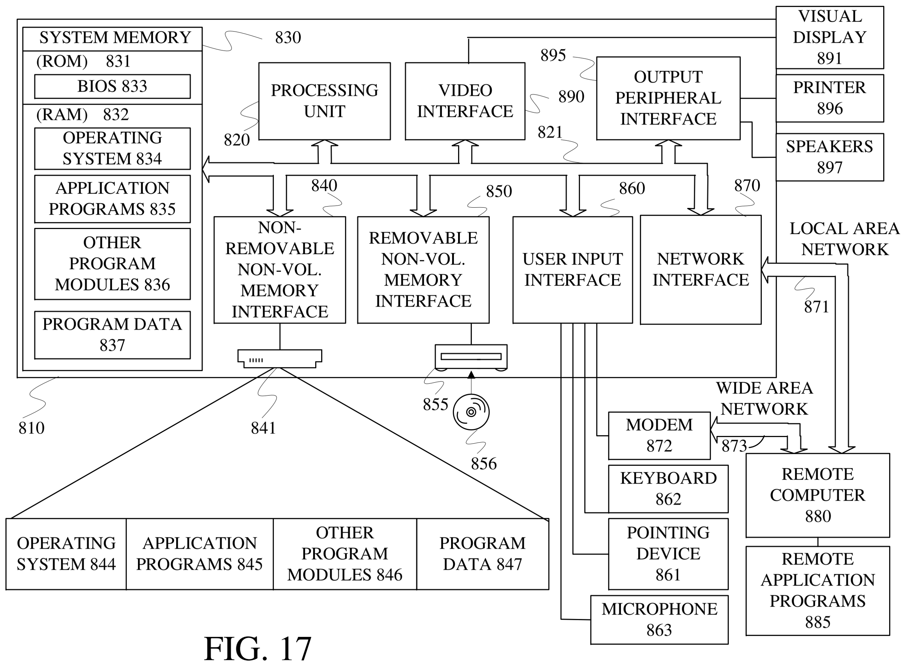

FIG. 17 is one example of a computing environment in which elements of other FIGs., or parts of it, (for example) can be deployed. With reference to FIG. 17, an example system for implementing some embodiments includes a computing device in the form of a computer 810 programmed to operate as described above. Components of computer 810 may include, but are not limited to, a processing unit 820 (which can comprise processors or servers from previous Figures), a system memory 830, and a system bus 821 that couples various system components including the system memory to the processing unit 820. The system bus 821 may be any of several types of bus structures including a memory bus or memory controller, a peripheral bus, and a local bus using any of a variety of bus architectures. Memory and programs described with respect to FIGS. 2 and 11 can be deployed in corresponding portions of FIG. 17.
Computer 810 typically includes a variety of computer readable media. Computer readable media can be any available media that can be accessed by computer 810 and includes both volatile and nonvolatile media, removable and non-removable media. By way of example, and not limitation, computer readable media may comprise computer storage media and communication media. Computer storage media is different from and does not include a modulated data signal or carrier wave. Computer storage media includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium, which can be used to store the desired information, and which can be accessed by computer 810. Communication media may embody computer readable instructions, data structures, program modules or other data in a transport mechanism and includes any information delivery media. The term "modulated data signal" means a signal that has one or more of its characteristics set or changed in such a manner as to encode information in the signal.

System memory 830 includes computer storage media in the form of volatile and/or nonvolatile memory such as read only memory (ROM) 831 and random-access memory (RAM) 832. A basic input/output system 833 (BIOS), containing the basic routines that help to transfer information between elements within computer 810, such as during start-up, is typically stored in ROM 831. RAM 832 typically contains data and/or program modules that are immediately accessible to and/or presently being operated on by processing unit 820. By way of example, and not limitation, FIG. 17 illustrates operating system 834, application programs 835, other program modules 836, and program data 837.

The computer 810 may also include other removable/non-removable volatile/nonvolatile computer storage media. By way of example only, FIG. 17 illustrates a hard disk drive 841 that reads from or writes to non-removable, nonvolatile magnetic media, an optical disk drive 855, and nonvolatile optical disk 856. The hard disk drive 841 is typically connected to the system bus 821 through a non-removable memory interface such as interface 840, and optical disk drive 855 are typically connected to the system bus 821 by a removable memory interface, such as interface 850.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media discussed above and illustrated in FIG. 17, provide storage of computer readable instructions, data structures, program modules and other data for the computer 810. In FIG. 17, for example, hard disk drive 841 is illustrated as storing operating system 844, application programs 845, other program modules 846, and program data 847. Note that these components can either be the same as or different from operating system 834, application programs 835, other program modules 836, and program data 837.

A user may enter commands and information into the computer 810 through input devices such as a keyboard 862, a microphone 863, and a pointing device 861, such as a mouse, trackball or touch pad. Other input devices (not shown) may include a joystick, game pad, satellite dish, scanner, or the like. These and other input devices are often connected to the processing unit 820 through a user input interface 860 that is coupled to the system bus but may be connected by other interface and bus structures. A visual display 891 or other type of display device is also connected to the system bus 821 via an interface, such as a video interface 890. In addition to the monitor, computers may also include other peripheral output devices such as speakers 897 and printer 896, which may be connected through an output peripheral interface 895.

The computer 810 is operated in a networked environment using logical connections (such as a controller area network - CAN, local area network - LAN, or wide area network WAN) to one or more remote computers, such as a remote computer 880.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the Internet. In a networked environment, program modules may be stored in a remote memory storage device. FIG. 17 illustrates, for example, that remote application programs 885 can reside on remote computer 880.

## Claims

1. An agricultural system, comprising:
an application machine (100) having a plurality of row units (106), each row unit (106) having an applicator (209);
a first flow meter (320) mounted to the application machine (100) and configured to detect an amount of material applied from a first applicator (209) on the application machine (100) and generate a first flow meter signal (352) indicative of the detected amount of the material;
a first pressure sensor (306) mounted to the application machine (100) and configured to detect a pressure in a second applicator (209) on the application machine (100) and generate a first pressure sensor signal (350) indicative of the detected pressure;
an application state detection system (321) configured to identify an applicator state for the second applicator (209) based on the first flow meter signal (352) and the first pressure sensor signal (350); and
a control signal generator (328) configured to generate a control signal (364) based on the applicator state for the second applicator (209).

2. The agricultural system of claim 1, and further comprising:
a second pressure sensor (306) mounted to the application machine (100) and configured to detect a pressure in a third applicator (209) on the application machine (100) and generate a second pressure sensor signal (350) indicative of the detected pressure in the third applicator (209), the application state detection system (321) being configured to identify an applicator state for the third applicator (209) based on the first flow meter signal (352), the first pressure sensor signal (350) and the second pressure sensor signal (350).

3. The agricultural system of claim 1 or 2, wherein the application machine includes a first plurality of applicators and a second plurality of applicators, wherein the first, second, and third applicators are in the first plurality of applicators and further comprising:
a second flow meter (320) configured to detect an amount of material applied from a fourth applicator (209) and generate a second flow meter signal (352) indicative of the detected amount of the material applied from the fourth applicator (209);
a third pressure sensor (306) mounted to the application machine (100) and configured to detect a pressure in a fifth applicator (209) on the application machine (100) and generate a third pressure sensor signal (350) indicative of the detected pressure, the fourth and fifth applicators (209) being in the second plurality of applicators, the application state detection system (321) configured to identify an applicator state for the fifth applicator (209) based on the second flow meter signal (352) and the third pressure sensor signal (350).

4. A computer implemented method of operating an agricultural system, comprising an agricultural system of one of the claims 1 to 3, and further comprising:
Detecting (434), with a first flow meter, an amount of material applied from a first applicator (209) on an application machine;
Generating (434) a flow meter signal (352) indicative of the amount of material applied, detecting, with a pressure sensor, a pressure in a second applicator;
Generating (436) a pressure signal (350) indicative of the pressure;
Identifying (448) an applicator state for the second applicator based on the first flow meter signal (352) and the pressure signal (350); and
Generating (464) a control signal based on the applicator state for the second applicator.

5. The computer implemented method of claim 4 and further comprising:
Extracting (438) a set of features from the first flow meter signal (352).

6. The computer implemented method of claim 4 or 5, further comprising:
Extracting (438) a set of features from the pressure signal (350).

7. The computer implemented method of one of the claims 4 to 6, wherein identifying an applicator state for the second applicator comprises:
Identifying (448) the applicator state based on the set of features from the first flow meter signal (352) and the set of features from the pressure signal (350).

8. The computer implemented method of one of the claims 4 to 7, wherein identifying the applicator state comprises:
Applying (454) the set of features from the first flow meter signal (352) and the set of features from the pressure signal (350) as inputs to a machine learning model (382); and Generating (454) an output with the machine learning model (382) indicative of the applicator state.

9. The computer implemented method of one of the claims 4 to 8, wherein identifying the applicator state comprises:
Applying (456) the set of features from the first flow meter signal (352) and the set of features from the pressure signal (350) as inputs to a state detection algorithm (384); and
Generating (456) an output with the state detection algorithm (384) indicative of the applicator state.

10. The computer implemented method of one of the claims 4 to 9, wherein identifying the applicator state comprises:
Using (458) the set of features from the first flow meter signal (352) and the set of features from the pressure signal (350) as inputs to a state look-up model (386); and
Identifying (458) the applicator state in the state look-up model (386).

11. The computer implemented method of one of the claims 4 to 10, and further comprising:
Detecting (436), with a plurality of additional pressure sensors, a pressure in a plurality of additional applicators (209);
generating a plurality of additional pressure signals (350), each of the plurality of additional pressure signals (350) being indicative of a pressure in a different one of the plurality of additional applicators (209); and
identifying (448) a plurality of applicator states, each of the plurality of applicator states corresponding to a different one of the plurality of additional applicators (209), based on the first flow meter signal (352) and the plurality of different pressure signals (350).

12. The computer implemented method of claim 11, wherein generating a control signal comprises:
Generating (464) the control signal based on the plurality of applicator states.

13. The computer implemented method of one of the claims 6 to 12, wherein extracting a set of features from the pressure signal comprises:
Extracting (440) a set of timing features from the pressure signal (350).

14. The computer implemented method of one of the claims 6 to 13 wherein extracting a set of features from the pressure signal comprises:
Extracting (442) a set of magnitude features from the pressure signal (350).

15. The computer implemented of one of the claims 6 to 14, wherein extracting a set of features from the pressure signal comprises:
Extracting (444) a set of computed features from the pressure signal (350).
